# EUROPEAN PATENT APPLICATION

(11) **EP 4 838 926 A1**
(43) Date of publication of application: **11.11.2026**
(21) Application number: 25736298.8
(22) Date of filing: 03.01.2025
(51) Int. Cl.: H04W 12/106, H04W 28/04, H04L 1/1812, H04W 84/12, H04L 1/1607, H04W 12/0471

(54) **METHOD AND DEVICE FOR SUPPORTING PROTECTION OF CONTROL FRAMES IN WIRELESS LAN SYSTEM**

(30) Priority: 03.01.2024 KR 20240001088; 25.11.2024 KR 20240170017
(71) Applicant: LG Electronics Inc., Yeongdeungpo-gu Seoul 07336 (KR)
(72) Inventor: BAEK, Sunhee, Seoul 06772 (KR); CHOI, Jinsoo, Seoul 06772 (KR); JANG, Insun, Seoul 06772 (KR); KIM, Geonhwan, Seoul 06772 (KR); YOON, Yelin, Seoul 06772 (KR); CHA, Dongju, Seoul 06772 (KR)
(74) Representative: Plasseraud IP
(86) International application number: PCT/KR2025/000144
(87) International publication number: WO 2025/147144

(57) **Abstract**

Disclosed are a method and a device for supporting protection of control frames in a wireless LAN system. A method according to one embodiment of the present disclosure may comprise the steps of: receiving, by a first station (STA), a block-acknowledgement (ACK) request frame on the basis of an integrity protocol from a second STA; and performing, by the first STA, an integrity check on the block-ACK request frame. Here, the block-ACK request frame includes, as a block-ACK request information field, one or more first field sets for block ACK-related information and one or more second field sets for protection-related information for the integrity check, wherein the protection-related information may be included across the one or more second field sets.

## Description

### [TECHNICAL FIELD]

The present disclosure relates to a method and device for supporting protection for a control frame in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and a device supporting protection for a control frame in a WLAN system.

A technical object of the present disclosure is to provide a method and a device for supporting an integrity check based on a broadcast/multicast integrity protocol (BIP) for a block-ACK request (BAR) frame in a WLAN system.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may include receiving, by a first station (STA), a block-acknowledgement(ACK) request frame based on an integrity protocol from a second STA; and performing, by the first STA, an integrity check on the block-ACK request frame. Here, the block-ACK request frame includes, as a block-ACK request information field, one or more first field sets for information related to block ACK and one or more second field sets for protection-related information for the integrity check, and the protection-related information may be included across the one or more second field sets.

A method according to an additional aspect of the present disclosure may include generating, by a second station (STA), a block-ACK request frame based on an integrity protocol; and transmitting, by the second STA, the block-ACK request frame to a first STA. Here, the block-ACK request frame includes, as a block-ACK request information field, one or more first field sets for information related to block ACK and one or more second field sets for protection-related information for the integrity check, and the protection-related information may be included across the one or more second field sets.

### [Technical Effects]

According to various embodiments of the present disclosure, a method and a device supporting protection for a control frame in a wireless LAN system may be provided.

According to various embodiments of the present disclosure, a method and a device for supporting a BIP-based integrity check for a block-ACK request (BAR) frame in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing a 4-way handshaking procedure to which the present disclosure may be applied.
FIG. 9 is a diagram representing an example of an expanded CCMP MPDU to which the present disclosure may be applied.
FIG. 10 represents a CCMP encapsulation block diagram to which the present disclosure may be applied.
FIG. 11 represents an example of the format of conventional AAD.
FIG. 12 represents a CCMP decapsulation block diagram to which the present disclosure may be applied.
FIG. 13 is a diagram representing an example of an expanded GCMP MPDU to which the present disclosure may be applied.
FIG. 14 represents a GCMP encapsulation block diagram to which the present disclosure may be applied.
FIG. 15 represents a GCMP decapsulation block diagram to which the present disclosure may be applied.
FIG. 16 is a diagram representing an exemplary format of a block-ACK request frame to which the present disclosure may be applied.
FIG. 17 illustrates a protection information field/subfield format according to an embodiment of the present disclosure.
FIG. 18 represents an example of a block-ACK request frame configuration supporting an integrity check according to an embodiment of the present disclosure.
FIG. 19 represents another example of a block-ACK request frame configuration supporting an integrity check according to an embodiment of the present disclosure.
FIG. 20 represents another example of a block-ACK request frame configuration supporting an integrity check according to an embodiment of the present disclosure.
FIG. 21 represents another example of a block-ACK request frame configuration supporting an integrity check according to an embodiment of the present disclosure.
FIG. 22 illustrates the structures of a Per TID Info subfield for a set including protection information according to an embodiment of the present disclosure,
FIG. 23 illustrates the operation of a transmitting STA supporting an integrity check for a block-ACK request frame according to the present disclosure.
FIG. 24 illustrates the operation of a receiving STA supporting an integrity check for a block-ACK request frame according to the present disclosure.
FIG. 25 is a diagram for describing an example of a method performed by the first STA according to the present disclosure.
FIG. 26 is a diagram for describing an example of a method performed by the second STA according to the present disclosure.

### [Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

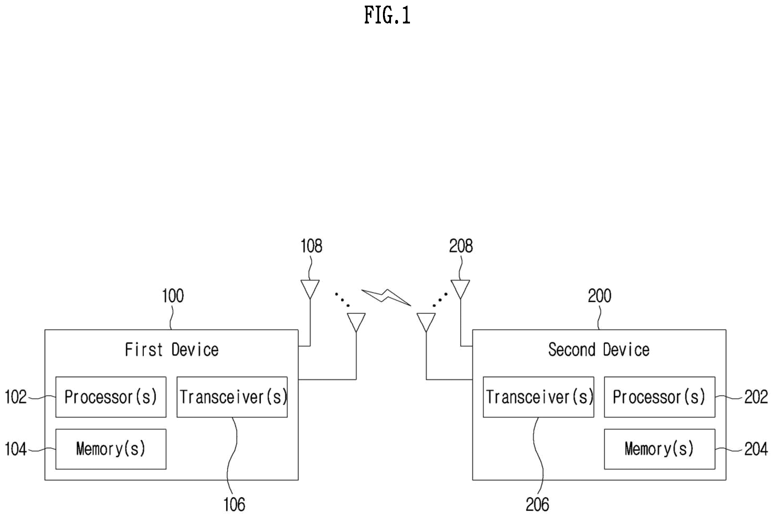

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

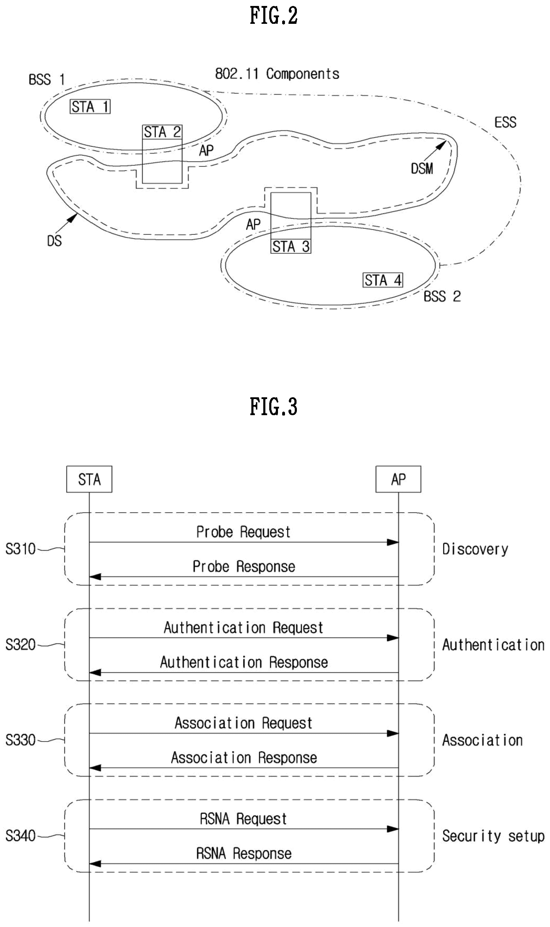

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

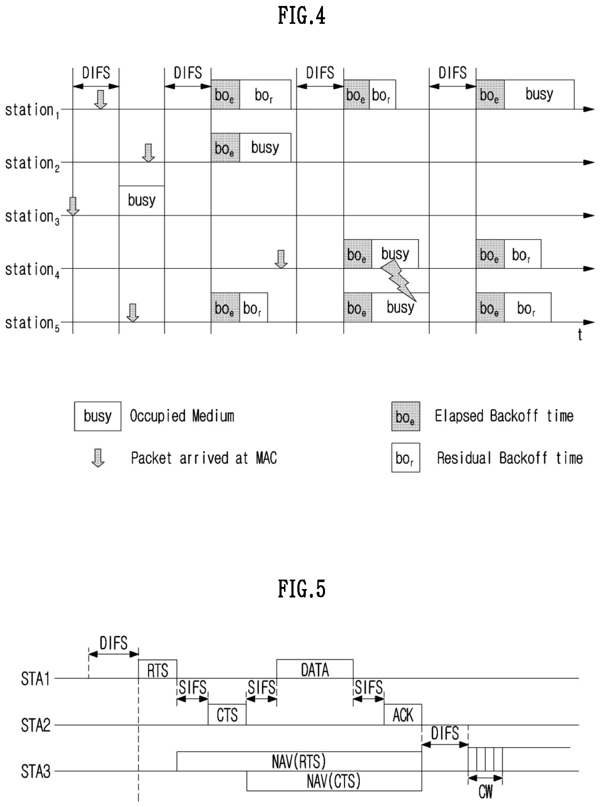

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2n-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STAS, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STAS temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STAS is shorter than that of STA1, STAS starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STAS coincides with the random backoff count value of STA4 by chance. In this case, a collision may occur between STA4 and STAS. When a collision occurs, both STA4 and STAS do not receive an ACK, so data transmission fails. In this case, STA4 and STA5 may double the CW value, select a random backoff count value, and perform a countdown. STA1 waits while the medium is occupied due to transmission of STA4 and STAS, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

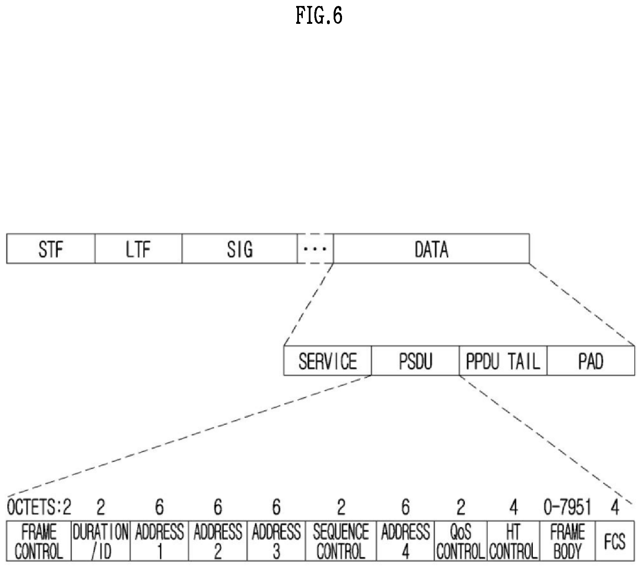

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

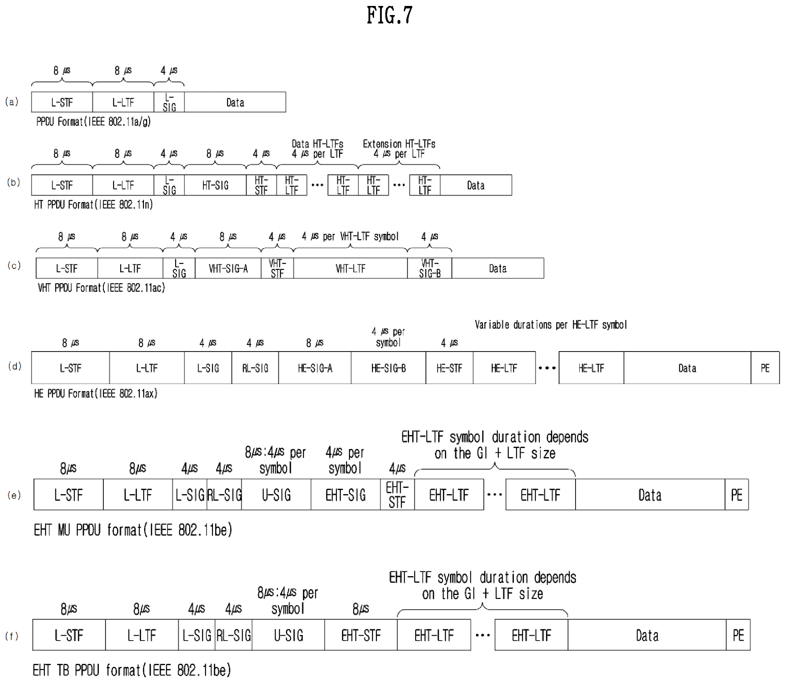

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### RSN Operation

As described by referring to FIG. 3, an authentication process after a discovery process between a STA and an AP may be performed in an open system manner, and an association process may be performed. This process may be referred to as step 0 for searching for whether to support a robust security network (RSN) and establishing authentication and association.

When step 0 is successfully completed, step 1 for securing a pairwise master key (PMK) and user authentication by IEEE 802.1X/EAP (extensible authentication protocol) or a pre-shared key (PSK) may be performed. A mutual authentication method applied here may include 802.1X/EAP, PSK or SAE (simultaneous authentication of equals), etc. For example, for a 802.1X/EAP authentication method, a PMK may be generated from a master session key (MSK) after authentication between a STA and a remote authentication dial-in user service (RADIUS). For a user authentication method by a PSK, an AP and a STA may directly set a PMK in the same way as a PSK. For a user authentication by SAE, an AP and a STA may directly set a PMK by using the operation value of mutual authentication and authentication process through a SAE authentication process.

Following step 1, step 2 for confirming whether the other party has the same PMK by using an EAPoL-Key frame and generating and sharing an encryption key may be performed. Step 2 may include the process of mutually confirming PMK generation through 4-way handshaking and generating and delivering a group key (e.g., a group temporal key (GTK)). A pairwise transient key (PTK), a key confirmation key (KCK), a key encryption key (KEK), and a temporal key (TK) may be generated through 4-way handshaking.

Specifically, a PMK may be generated from a MSK in step 1, and a PTK may be generated from a PMK in step 2. Here, a PTK is set separately as a KCK, a KEK and a TK. A GTK may be generated from an AP and delivered to a STA. When an AP wants to generate a new GTK, it may perform handshaking with a STA and deliver a new GTK to a STA.

In order to confirm whether a STA and an AP have the same PMK, for 802.1X/EAP, the same MSK is set between a STA and an authentication server (AS) by a user authentication result between a STA and an AS, and an AS delivers a corresponding MSK to an AP. A STA and an AP may mutually confirm whether to have a PMK, a symmetric key generated from a MSK, through 4-way handshaking. For a PSK, an authentication procedure may be replaced by mutually verifying whether a PMK generated from a PSK set in advance between an AP and a STA is secured through 4-way handshaking. For SAE, a PMK set in advance between an AP and a STA may be mutually verified through 4-way handshaking.

It may also be confirmed whether a STA and an AP have the same PMK by mutually verifying that the same PTK was generated. For example, it may also be confirmed whether a PMK is secured through message 2 and message 3 of 4-way handshaking. Specifically, in message 2, a STA may transmit the KCK of a PTK it generated to an AP by including it in a key MIC field. In message 3, an AP may transmit the KCK of a PTK it generated to a STA by including it in a key MIC field. Through this, a STA (an AP) may verify that an AP (a STA) generated the same PTK as its PTK and confirm that an AP (a STA) has the same PMK as its PMK. Meanwhile, in message 1, the value of a key MIC field may be set as 0, and in message 4, a KCK value may be included in a key MIC field.

In this way, a security key for encrypting data to be transmitted and received between a STA and an AP may be generated in step 2. In a RSN, a different security key is generated for each STA associated with an AP, and another security key is generated when a STA is re-associated with another AP.

Based on a TK generated as a result of 4-way handshaking in step 2, data encryption may be performed by using a temporal key integrity protocol (TKIP), a cipher-block chaining message authentication code protocol (CCMP), a Galois/Counter Mode protocol (GCMP), etc., which may be referred to as step 3.

The above-described MSK, PSK, PMK, PTK, KCK, KEK and TK correspond to a pairwise key, i.e., a pairing key between an AP and a STA. Unlike a pairwise key, a group key may be generated based on a group master key (GMK) so that an AP generates a security key for a group-addressed frame, such as a beacon frame. A GMK is randomly set by an AP. A group temporal key (GTK) is generated from a GMK by a pseudorandom function (PRF) function, and corresponds to a unidirectional group key from an AP to a STA.

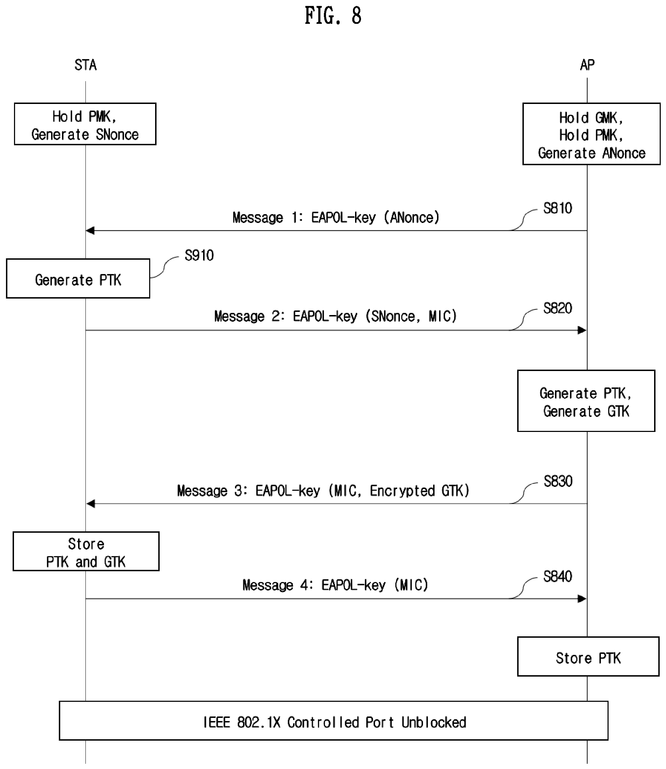

FIG. 8 is a diagram for describing a 4-way handshaking procedure to which the present disclosure may be applied.

An STA corresponds to a supplicant, and an AP corresponds to an authenticator. 4-way handshaking may be performed to generate and confirm a PTK and a GTK between an AP and an STA when an STA has or knows a PMK and an AP has or knows a PMK and a GMK.

ANonce and SNonce correspond to a factor used in a PRF function used to generate a PTK. ANonce may correspond to a random number generated by an access point (i.e., an authenticator). SNonce may correspond to a random number generated by an STA (i.e., a supplicant). A PRF function may correspond to a function that generates a PTK based on, for example, a PMK, ANonce, SNonce, the MAC address of a supplicant and the MAC address of an authenticator.

Message 1 in S810 is transmitted from an AP to an STA in a unicast manner, and an EAPOL-key frame may include ANonce information. When an AP generates a PMK, PMKID may be included in the key data field of an EAPOL-key frame. An STA may generate a PTK based on information received from an AP and may generate a KCK, a KEK and a TK based on a PTK.

Message 2 in S820 is transmitted from an STA to an AP in a unicast manner, and an EAPOL-key frame may include SNonce information and a key message integrity code (MIC). For example, the key MIC of message 2 may have a value based on a KCK generated by an STA. An AP may generate a PTK based on information received from an STA and may generate a KCK, a KEK and a TK based on a PTK. An AP may verify whether an AP and an STA generated the same PTK based on whether the KCK value of a PTK generated based on a value included in message 2 and a KCK value related to a key MIC value included in message 2 are the same. In addition, an AP may generate a GTK, if necessary. A GTK may be generated by an AP from a GMK without the participation of an STA.

Message 3 in S830 is transmitted from an AP to an STA in a unicast manner, and an EAPOL-key frame may include MIC (i.e., corresponds to the KCK value of a PTK generated by an AP) and encrypted GTK information. The encrypted GTK of message 3 may be encrypted based on a KEK generated by an AP and may be included in a key data field. An STA may store a PTK in PKT-SA (PKT-Security Association) and a GTK in GTK-SA.

Message 4 in S840 is transmitted from an STA to an AP in a unicast manner, and an EAPOL-key frame may include MIC information. When verification is completed through MIC, an AP may store a PTK in PTK-SA and a GTK in GTK-SA.

When 4-way handshaking is successfully completed in this way, a virtual control port that blocks all traffic may be unblocked and encrypted traffic may be transmitted and received. Afterwards, all unicast traffic may be encrypted by a PTK, and all multicast/broadcast traffic may be encrypted by a GTK.

### RSNA Confidentiality and Integrity Protocol

For RSNA, an authentication mechanism for STAs, a key management algorithm, cryptographic key establishment, a cryptographic mechanism, fast BSS transition (FT), cryptographic encapsulation for a robust management frame, etc. may be defined. For example, a cryptographic mechanism may include a counter mode (CTR) with cipher-block chaining message authentication code (CBC-MAC) protocol (CCMP), a Galois/counter mode protocol (GCMP), etc.

RSNA security may include algorithms and procedures such as a temporal key integrity protocol (TKIP), a CCMP, a GCMP, a broadcast/multicast integrity protocol (BIP), RSNA establishment and termination procedures, a key management procedure (e.g., key distribution), etc. For example, RSNA establishment and termination procedures may include IEEE 802.1X authentication, simultaneous authentication of equals (SAE) authentication, opportunistic wireless encryption (OWE) defined in Internet engineering task force (IETF) request for comments (RFC) 8110, etc.

Hereinafter, a counter mode (CTR) with cipher-block chaining message authentication code (CBC-MAC) protocol (CCMP) is described.

A CCMP is a protocol that provides data confidentiality, authentication, integrity, replay protection, etc. A CCMP is based on the CCM of an advanced encryption standard (AES) encryption algorithm. CCM combines a CTR for data confidentiality and a CBC-MAC for authentication and integrity. CCM may protect integrity for both the selected parts of an MPDU data field and an MPDU header (an MAC header).

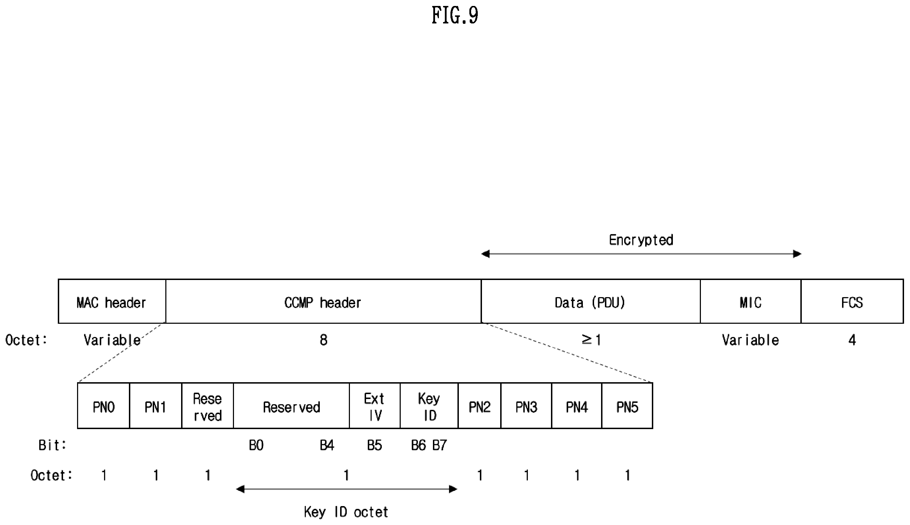

FIG. 9 is a diagram representing an example of an expanded CCMP MPDU to which the present disclosure may be applied.

For a security protocol version 0 (PV0) MPDU, CCMP-128 processing expands an original MPDU size by 16 octets (i.e., 8 octets for a CCMP header field and 8 octets for an MIC field). CCMP-256 processing expands an original MPDU size by 24 octets (i.e., 8 octets for a CCMP header field and 16 octets for an MIC field). A CCMP header field is constructed from a packet number (PN), an extended initialization vector (ExtIV) and a key ID subfield. A PN is a 48-bit PN expressed as a 6-octet array. PN5 is the most significant octet of a PN, and PN0 is the least significant octet. The third octet of a CCMP header is reserved. The ExtIV subfield (bit 5 (B5)) of a key ID octet is always set as 1 for a CCMP, bit 6 (B6) and bit 7 (B7) are a key ID subfield and the remaining bits of a key ID octet are reserved.

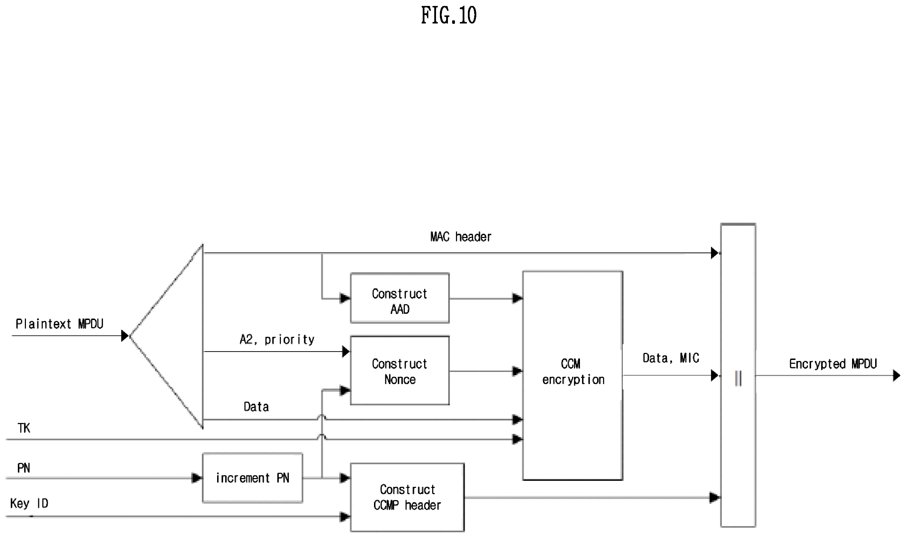

FIG. 10 represents a CCMP encapsulation block diagram to which the present disclosure may be applied.

Additional authentication data (AAD) may be constructed from the MAC header of a plaintext MPDU. Nonce may be constructed based on the A2 (Address 2) and priority of a plaintext MPDU and an incremented PN. AAD and Nonce may be used for CCM encryption along with data and a TK. A CCMP header may be constructed based on an incremented PN and a key ID. Data and an MIC which are the results of CCM encryption may construct an encrypted MPDU as shown in the example of FIG. 9, along with an MAC header and a CCMP header.

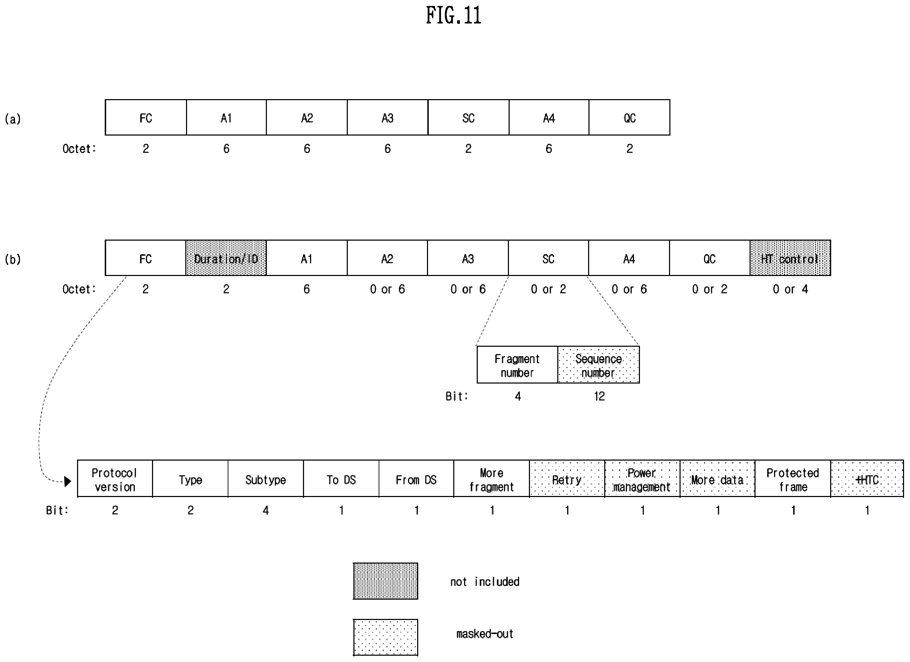

FIG. 11 represents an example of the format of conventional AAD.

The example of FIG. 11(a) may correspond to the example of a conventional AAD construction for a PV0 MPDU. Frame control (FC), A1 (address 1), A2 (address 2), A3 (address 3) and sequence control (SC) fields may always be included in conventional AAD when they are included in an MAC header. The length of AAD may be different according to the presence or absence of a QoS control (QC) field and an address 4 (A4) field. For conventional AAD, for example, when both QC and A4 are absent, an AAD length may be 22 octets, when QC is present and A4 is absent, an AAD length may be 24 octets, when QC is absent and A4 is present, an AAD length may be 28 octets, and when both QC and A4 are present, an AAD length may be 30 octets.

AAD is constructed from an MPDU header. Referring to FIG. 11(b), conventional AAD does not include the duration/ID field of an MAC header and also does not include the HT control field of an MAC header. It is to ensure that a field whose contents may be changed or inserted/deleted during an operation such as retransmission is not included in conventional AAD.

In addition, some subfields of the frame control (FC) field of an MAC header may be masked out. Mask-out means that the corresponding subfield/field of an MAC header is included in AAD by changing its value to 0.

For example, subfields masked out in the FC field of conventional AAD are as follows:
3 LSBs (i.e., bits 4, 5 and 6) of the subtype subfield of a data frame are masked out and bit 7 is not modified;
A retry subfield is masked out;
A power management subfield (i.e., bit 12) is masked out;
A more data subfield (i.e., bit 13) is masked out;
A protected frame subfield (i.e., bit 14) is not modified (i.e., left as 1);
A +HTC subfield (i.e., bit 15) is masked out in all data frames including a QoS control field and otherwise, is not modified;
Other subfields of an FC field are not modified.

For example, a sequence number subfield in the sequence control (SC) field of conventional AAD may be masked out.

Although not illustrated in the example of FIG. 11, when a QoS control (QC) field is included in conventional AAD, a QC field may be included in conventional AAD when at least one of an MSDU priority subfield, a QC traffic identifier (TID) subfield, an A-MSDU capable subfield, an A-MSDU present subfield and an A-MSDU type subfield is present in an MAC header. Other subfields may be masked out in the QC field of conventional AAD. In other words, an end of service period (EOSP) subfield, an ACK policy indicator subfield, a TXOP limit subfield, a queue size subfield, a TXOP duration requested subfield and an AP power save (PS) buffer state subfield may be masked out and may not be used to construct conventional AAD.

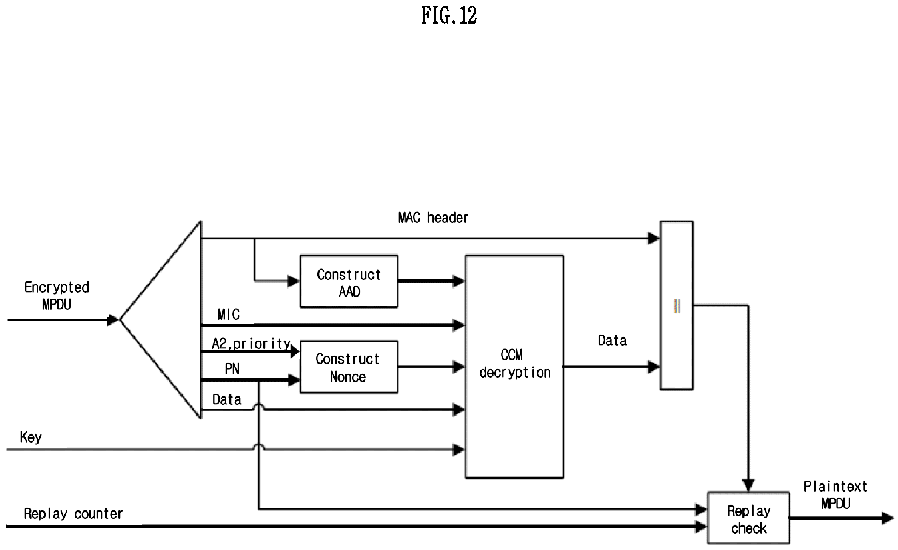

FIG. 12 represents a CCMP decapsulation block diagram to which the present disclosure may be applied.

AAD may be constructed from the MAC header of an encrypted MPDU. Nonce may be constructed based on the A2 and priority of an encrypted MPDU and a PN. AAD and Nonce may be used for CCM decryption along with an MIC, data and a key. Data, a result of CCM decryption, may be replay-checked along with an MAC header to obtain a plaintext MPDU. A replay check may be based on a PN and a replay counter.

Hereinafter, a broadcast/multicast integrity protocol (BIP) is described.

A BIP provides data integrity and replay protection for a group-addressed robust management frame after establishing an integrity group temporal key security association (IGTKSA). For example, a BIP provides data integrity and replay protection for a beacon frame after establishing a beacon IGTKSA (BIGTKSA). A BIP may use an IGTK or a BIGTK to calculate an MAC management PDU (MMPDU) MIC. A management MIC element (MME) may be located after all other elements of a management frame body and before an FCS. In other words, an MME may be included as the last element of a management frame body. An MME may include an element ID field, a length field, a key ID field, an IGTK packet number (IPN)/BIGTK packet number (BIPN) field and an MIC field.

Conventional AAD for a BIP may be constructed based on FC, A1, A2 and A3, and a retry subfield (bit 11), a power management subfield (bit 12) and a more data subfield (bit 13) within FC may be masked out and other subfields may not be modified.

Hereinafter, a Galois/counter mode protocol (GCMP) is described.

A GCMP is a protocol that provides data confidentiality, authentication, integrity, replay protection, etc. An EHT RSNA STA may support GCMP-256. A GCMP is based on the GCM of an advanced encryption standard (AES) encryption algorithm. GCM may protect integrity for both the selected parts of an MPDU data field and an MPDU header (an MAC header).

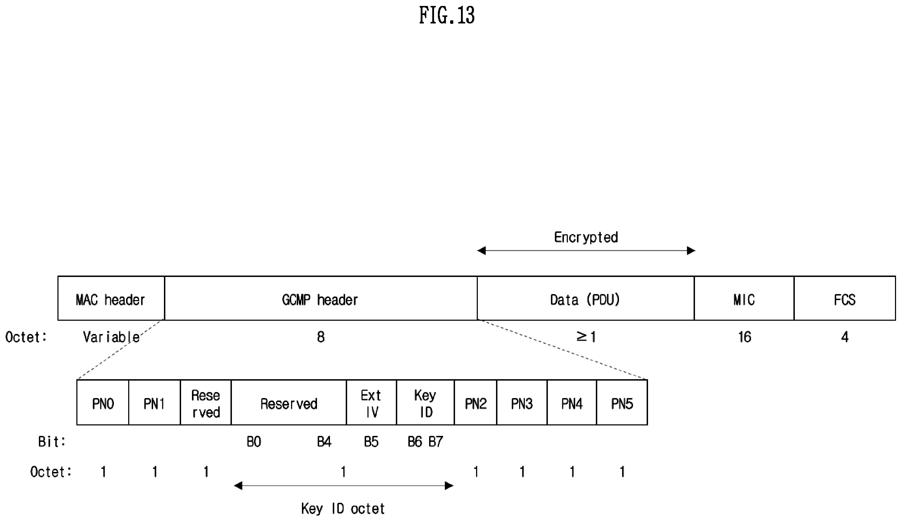

FIG. 13 is a diagram representing an example of an expanded GCMP MPDU to which the present disclosure may be applied.

GCMP processing expands an original MPDU size by 24 octets (i.e., 8 octets for a GCMP header field and 16 octets for an MIC field). A CCMP header field is constructed from a packet number (PN) and a key ID subfield. A PN is a 48-bit PN expressed as a 6-octet array. PN5 is the most significant octet of a PN, and PN0 is the least significant octet. The third octet of a GCMP header is reserved. The ExtIV subfield (bit 5 (B5)) of a key ID octet is always set as 1 for a GCMP, bit 6 (B6) and bit 7 (B7) are a key ID subfield and the remaining bits of a key ID octet are reserved.

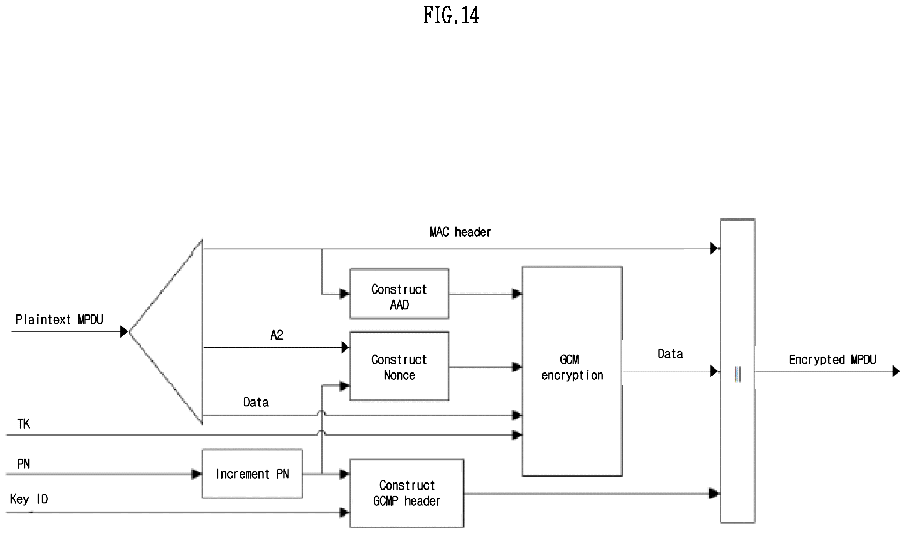

FIG. 14 represents a GCMP encapsulation block diagram to which the present disclosure may be applied.

Additional authentication data (AAD) may be constructed from the MAC header of a plaintext MPDU. Nonce may be constructed based on the address 2 (A2) of a plaintext MPDU and an incremented PN. AAD and Nonce may be used for GCM encryption along with data and a TK. A GCMP header may be constructed based on an incremented PN and a key ID. Data, a result of CCM encryption, may construct an encrypted MPDU as shown in the example of FIG. 13, along with an MAC header and a CCMP header.

Since the construction of conventional AAD applied to a GCMP is the same as described by referring to FIG. 11, an overlapping description is omitted.

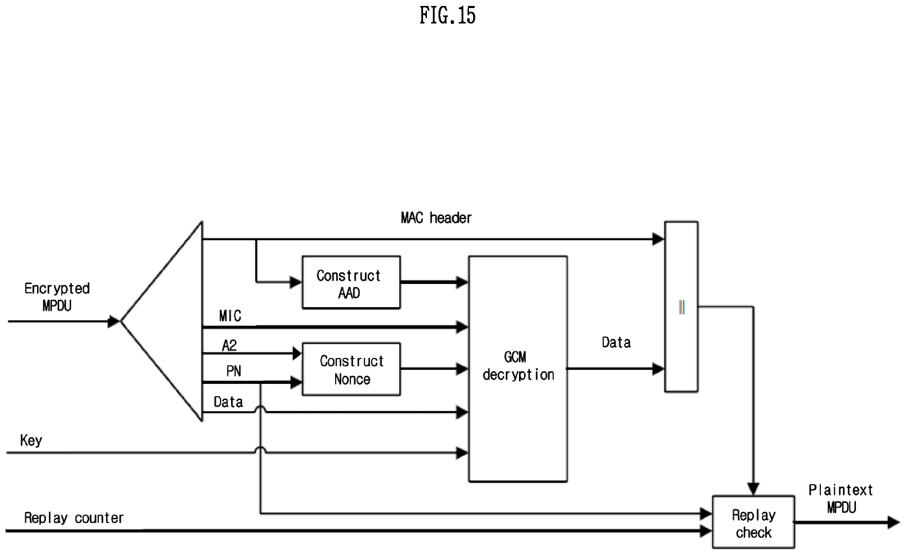

FIG. 15 represents a GCMP decapsulation block diagram to which the present disclosure may be applied.

AAD may be constructed from the MAC header of an encrypted MPDU. Nonce may be constructed based on the A2 of an encrypted MPDU and a PN. AAD and Nonce may be used for GCM decryption along with data and a key. Data, a result of GCM decryption, may be replay-checked along with an MAC header to obtain a plaintext MPDU. A replay check may be based on a PN and a replay counter.

### Block-ACK Request (BAR) Frame

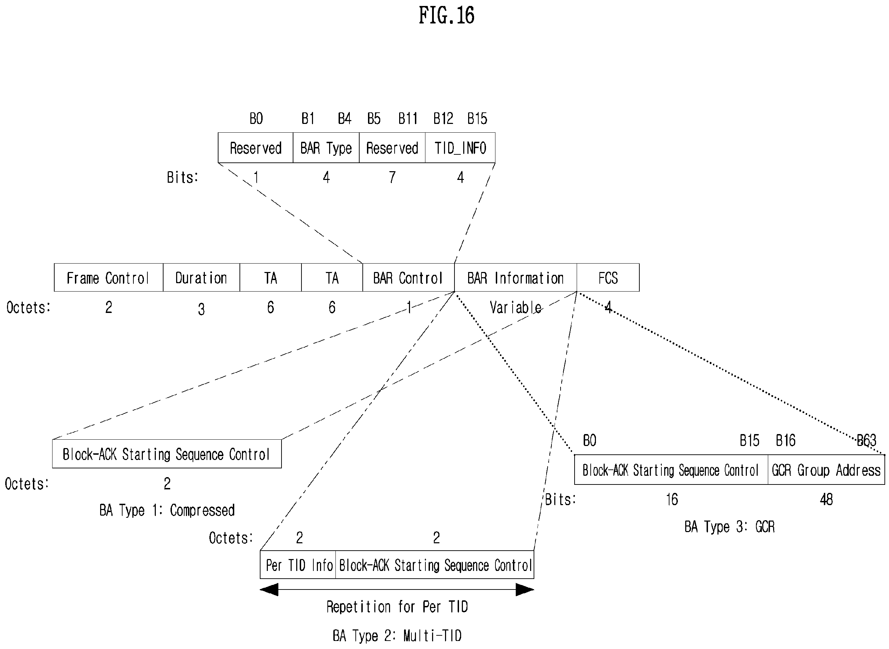

FIG. 16 is a diagram representing an exemplary format of a block-ACK request frame to which the present disclosure may be applied.

A block-ACK request frame may be intended to request the transmission of a block-ACK frame in which a plurality of confirmation responses are included in one frame, thereby increasing channel efficiency. For example, the first STA (e.g., an AP) may request a reception result for multiple MPDUs through a block-ACK request frame, and the second STA(s) that receive a block-ACK request frame may transmit a block-ACK frame including a confirmation response for multiple MPDUs based on a corresponding request.

As illustrated in FIG. 16, a block-ACK request (BAR) frame may include a BAR control field and a BAR information field in a frame body.

A BAR control field may include a BAR type indicating the type of a block-ACK request frame (e.g., compressed, multi-TID, groupcast with retries (GCR), etc.), TID information (TID_INFO), etc.

A BAR information field may be based on the type of a block-ACK request frame (e.g., a block-ACK request frame variant type) indicated by a BAR type field/subfield within a BAR control information.

For example, when a compressed block-ACK request frame type (e.g., a compressed block-ACK frame type or an extended compressed block-ACK frame type) is indicated, a BAR information field format corresponding to a compressed block-ACK request may include a block-ACK starting sequence control subfield.

For example, a block-ACK starting sequence control subfield may include a fragment number subfield and a starting sequence number subfield. Here, a fragment number subfield is set as 0, and a starting sequence number subfield may include the sequence number of the first MSDU or A-MSDU to which a corresponding block-ACK request frame is transmitted.

As another example, when a multi-TID (multi-STA) block-ACK request frame type is indicated, a BAR information field format corresponding to a multi-TID block-ACK request may include a Per TID Info subfield and a block-ACK starting sequence control subfield for each TID.

For example, a Per TID Info subfield may include a 4-bit TID value subfield. In addition, a block-ACK starting sequence control subfield may include a fragment number subfield and a starting sequence number subfield. Here, a fragment number subfield is set as 0, and a starting sequence number subfield may include the sequence number of the first MSDU or A-MSDU to which a corresponding block-ACK request frame is transmitted.

In this regard, the TID_INFO subfield of the BAR control field of a multi-TID block-ACK request frame may determine the number of TIDs present in a multi-TID block-ACK request frame given as TID_INFO + 1. For example, when a TID_INFO subfield is set as 2, it may mean that there are three TID values in the BAR information field of a multi-TID block-ACK request frame.

As another example, when a GCR block-ACK request frame type is indicated, a BAR information field format corresponding to a GCR block-ACK request may include a GCR group address subfield and a block-ACK starting sequence control subfield. Here, a GCR group address subfield may include the MAC address of a group in which a reception status is requested. In addition, a block-ACK starting sequence control subfield may include a fragment number subfield and a starting sequence number subfield. Here, a fragment number subfield is set as 0, and a starting sequence number subfield may include the sequence number of the first MSDU or A-MSDU to which a corresponding block-ACK request frame is transmitted.

As another example, when a GLK-GCR block-ACK request frame type is indicated, a BAR information field format corresponding to a GCR-GCR block-ACK request may include a block-ACK starting sequence control subfield. Here, a block-ACK starting sequence control subfield may include a fragment number subfield and a starting sequence number subfield. Here, a fragment number subfield is set as 0, and a starting sequence number subfield may include the sequence number of the first MSDU or A-MSDU to which a corresponding block-ACK request frame is transmitted.

### A method for supporting an integrity check for a block-ACK request (BAR) frame

In a conventional wireless LAN system, for individually addressed data frames (e.g., unicast-based data frames) and management frame(s), encryption/decryption based on Temporal Key Integrity Protocol (TKIP), CTR with CBC-MAC protocol (CCMP)/GCM Protocol (GCMP) may be performed/applied by using a pairwise transient key (PTK). In addition, for group addressed frames (e.g., broadcast-based data frames), encryption/decryption based on TKIP/CCMP/GCMP may be performed/applied by using a group temporal key (GTK). That is, CCMP/GCMP are security protocols that perform encryption/decryption, in which a TK based on a PTK may be used in a single-user (SU) case, and a TK based on a GTK may be used in a multi-user (MU) case. CCMP/GCMP may ensure confidentiality and integrity for data frames and management frame(s).

In addition, for group addressed management frame(s), a BIP-based integrity check may be performed by using an integrity group temporal key (IGTK). In particular, in the case of a beacon frame, a BIP-based integrity check may be performed by using a beacon integrity group temporal key (BIGTK). In the case of BIP, a TK based on an IGTK/BIGTK is used to generate a message integrity code (MIC) for a frame body of the corresponding data frame, and an integrity check based thereon may be performed. That is, BIP, unlike CCMP/GCMP, may ensure only integrity for data frames and management frame(s).

The method of constructing an MPDU based on CCMP and GCMP and the method of constructing a management MPDU (MMPDU) based on BIP have the following differences.

First, in the case of CCMP/GCMP, a transmitting STA performs encryption on a data portion by using CCM/GCM, transmits encrypted data, and a receiving STA may decrypt the received encrypted data. In contrast, in the case of BIP, a transmitting STA does not perform encryption on the data portion and may perform the corresponding protocol to generate a MIC for an integrity check of data in a frame body.

Next, in the case of CCMP/GCMP, an MPDU may be constructed and transmitted/received in an order of a MAC header, a CCMP/GCMP header, encrypted data, a MIC (an encrypted MIC in the case of CCMP), and an FCS. In contrast, in the case of BIP, the MPDU may be constructed and transmitted/received in an order of a MAC header, a management frame body including an MME (management MIC element), and an FCS. Herein, since the MME substitutes for a role of the CCMP/GCMP header, the MME may include information of a Key ID field, an IPN/BIPN, and a MIC.

As described above, protection is supported for data frames and management frames including beacon frames among group addressed frames. However, protection is not supported for control frames, and accordingly, control frames are transmitted and received in a state in which no protocol for encryption/decryption and/or integrity check is applied.

For example, an ACK frame, a block-ACK (BlockAck, Block Ack, BA) frame and a block-ACK request frame correspond to a type of control frame. When a transmitting STA transmits data, a receiving STA may transmit ACK for corresponding data to a transmitting STA. In this case, STA(s) that support an A(aggregated)-MPDU may configure corresponding ACK with A-MPDUs and transmit it in the form of block-ACK.

A block-ACK request frame may be transmitted by a transmitting STA to receive block-ACK from a receiving STA. In other words, when a transmitting STA transmits a block-ACK request frame to a receiving STA, a receiving STA may transmit a block-ACK frame to a corresponding transmitting STA. Based on this, a block-ACK request frame may be used to obtain ACK information for a previous frame transmitted from a TXOP or to initialize (e.g., clear) the receive re-order buffer of a receiving STA.

In this regard, when the information of a block-ACK request frame is exposed to the third STA (e.g., an attack STA), ACK information which confirms whether data is transmitted and received between a transmitting STA and a receiving STA may be acquired to disturb whether transmission and reception are performed between a transmitting STA and a receiving STA. As a result, an attack on a block-ACK REQUEST frame may lead to the degradation of a data transmission and reception capability and the resulting waste of power/medium.

Considering this, the present disclosure proposes a security technique for securing integrity of a block-ACK request frame transmitted and received between a transmitting STA and a receiving STA.

Values/names proposed in the present disclosure may be changed, and the scope of the present disclosure is not limited thereto. In addition, the STA in the present disclosure may include a non-AP STA and an AP STA.

In addition, in the description of the present disclosure, it is assumed that STA(s) transmitting and receiving a block-ACK request frame according to Embodiment 1-1 to Embodiment 1-3 of the present disclosure are a UHR STA (and/or a beyond UHR STA). As an example, when a block-ACK request frame according to Embodiment 1-1 to Embodiment 1-3 of the present disclosure is utilized, it may be assumed that all receiving STAs receiving a block-ACK request frame transmitted by an AP which is a transmitting STA are a UHR STA. In other words, if a block-ACK request frame configured according to the proposed method of the present disclosure is received by a pre-UHR STA (e.g., an EHT/HE STA, etc.), an error may occur during decoding for a corresponding block-ACK request frame. In contrast, it may be assumed that a receiving STA receiving a block-ACK request frame according to Embodiment 1-4 of the present disclosure is not only a UHR STA (and/or a beyond UHR STA), but also a pre-UHR STA (e.g., an EHT/HE STA, etc.).

Additionally, although the present disclosure is described by taking, as a representative example, a security technique for a block-ACK request frame among the control frames, the proposed method of the present disclosure may be extended and applied to other types of control frames in addition to a block-ACK request frame.

In the present disclosure, performing an integrity check on a block-ACK request frame may be interpreted as extending and applying a BIP to a block-ACK request frame. In this regard, for an existing defined BIP, a matter for a control frame may be additionally defined or a separate protocol based on a BIP for the integrity check of a control frame may be newly defined.

Hereinafter, methods for supporting/performing an integrity check on a block-ACK request frame will be described through specific examples.

### Embodiment 1

The present embodiment relates to a method for configuring a block-ACK request frame to support an integrity check. Specifically, in order to apply a BIP to a block-ACK request frame, the present disclosure proposes a configuration in which protection-related information is included within a block-ACK request frame in a sub-form, instead of a method for including a management MIC element (MME) at the end of a frame body when applying a BIP to a management frame.

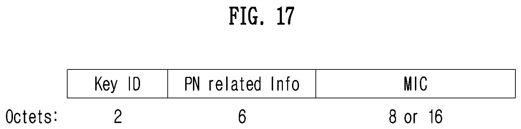

FIG. 17 illustrates a protection information field/subfield format according to an embodiment of the present disclosure.

Referring to FIG. 10, a protection information (sub)field format including information required for an integrity check may include Key ID information, PN-related information (e.g., IPN/BIPN information), and MIC information.

A corresponding protection information (sub)field format may be included within a block-ACK request frame in the sub-form of a protection information subfield.

The length of each piece of information included in the corresponding format is not limited to that illustrated in FIG. 17. For example, a Key ID field may have a length of 2 octets in the case of a Key ID indicating an IGTK or a BIGTK, but may have a length of 2 bits in the case of a Key ID indicating a GTK. In addition, the MIC field may have a length of 8 octets, 16 octets, 64 octets, or the like. Additionally, the length may be changed by additionally applying a MIC value to a separate function.

In this regard, if a key is not required to be used for MIC generation, Key ID information may not be included in the corresponding protection information (sub)field.

Additionally or alternatively, in the present disclosure, it is described by utilizing a protection information (sub)field format as illustrated in FIG. 17 and exemplifying that corresponding information is additionally configured for a block-ACK request frame, but it is not limited thereto. In other words, a key ID, PN-related information, and/or an MIC may be separated/distributed and included within a control frame to which security is applied. As an example, in the configuration of Embodiment 1-2, Embodiment 1-3 and Embodiment 1-4, information for a key ID may be located in a position preceding a protection information (sub)field consisting of PN-related information and an MIC (e.g., within a BAR control field, a BAR information field, or a set/BAR information field for (or corresponding to) separate Per TID Info).

A block-ACK request frame for an integrity check may be configured based on one or more of the formats described below.

### Embodiment 1-1

A protection information (sub)field according to the present disclosure may be located within a BAR control field included in a block-ACK request frame.

For example, by applying a BIP to a BAR control field within a block-ACK request frame, a protection information (sub)field may be included at the last part of a corresponding field.

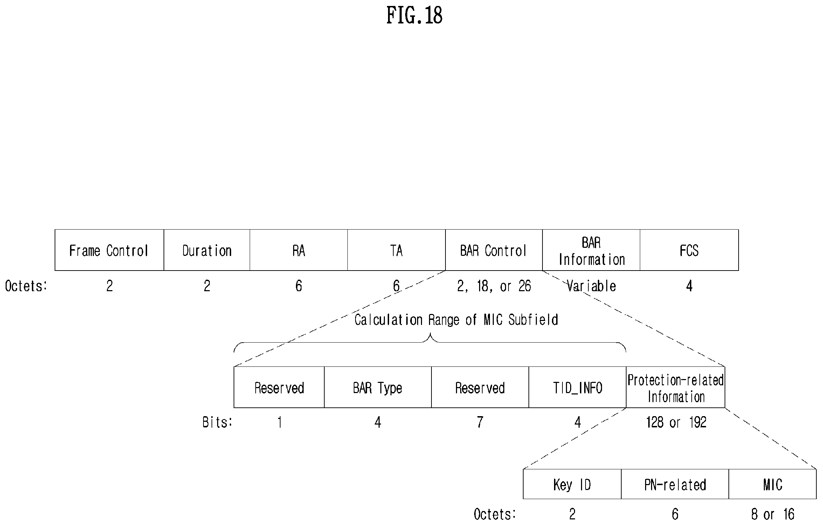

FIG. 18 represents an example of a block-ACK request frame configuration supporting an integrity check according to an embodiment of the present disclosure.

Referring to FIG. 18, a protection information (sub)field described in FIG. 17 may be located at the last part within a common information field.

In this case, a transmitting STA may apply a BIP to a BAR control field and add a protection information (sub)field to the last of a corresponding field to transmit a block-ACK request frame. Based on this, a receiving STA that receives a corresponding block-ACK request frame may perform an integrity check on a BAR control field within a block-ACK request frame based on corresponding information.

In this regard, the calculation range of MIC information included in a corresponding protection information (sub)field, i.e., an MIC subfield, may correspond to a BAR control field in which a protection information (sub)field is included. In other words, a target to which an integrity check is performed/applied based on a protection information (sub)field may correspond to a BAR control field to which a corresponding (sub)field belongs.

### Embodiment 1-2

A protection information (sub)field according to the present disclosure may be located within a BAR information field included in a block-ACK request frame.

For example, a BIP may be applied to BAR information field(s) within a block-ACK request frame to include a protection information (sub)field in the last part of each BAR information field.

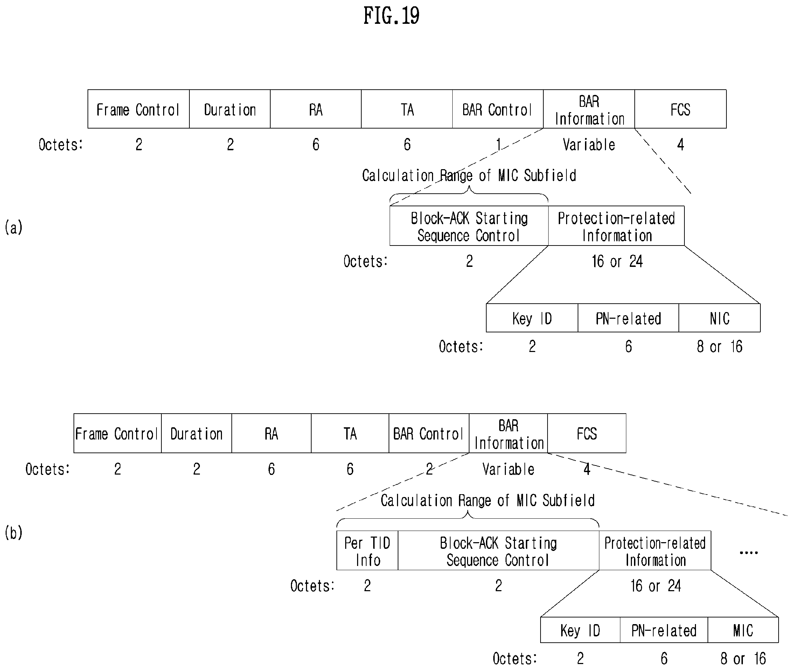

FIG. 19 represents another example of a block-ACK request frame configuration supporting an integrity check according to an embodiment of the present disclosure.

Specifically, FIG. 19(a) illustrates a case in which a protection information (sub)field is included in a BAR information field within a compressed block-ACK request frame, and FIG. 19(b) illustrates a case in which a protection information (sub)field is included in a BAR information field for each TID within a multi-TID block-ACK request frame. Here, a BAR information field for each TID may include a Per TID Info subfield and a block-ACK starting sequence control field.

Referring to FIG. 19, a protection information (sub)field described in FIG. 17 may be located at the last part within each BAR information field.

For example, a transmitting STA may apply a BIP to a BAR information field including the information of each TID and add a protection information (sub)field to the last of a corresponding field to configure and transmit a block-ACK request frame. Through each protection information (sub)field, a receiving STA that receives a corresponding block-ACK request frame may perform an integrity check on each BAR information field.

For example, a key ID configuring a protection information (sub)field included in a BAR information field within a multi-TID block-ACK request frame may refer to the PTK of an STA corresponding to a corresponding BAR information field, and a corresponding STA may derive an MIC value based on this. A corresponding STA may perform an integrity check based on a comparison between a derived MIC value and the value of MIC information within a protection information (sub)field included in a BAR information field.

### Embodiment 1-3

A protection information (sub)field according to the present disclosure may be located at a part other than a BAR information field and a BAR control field within a block-ACK request frame.

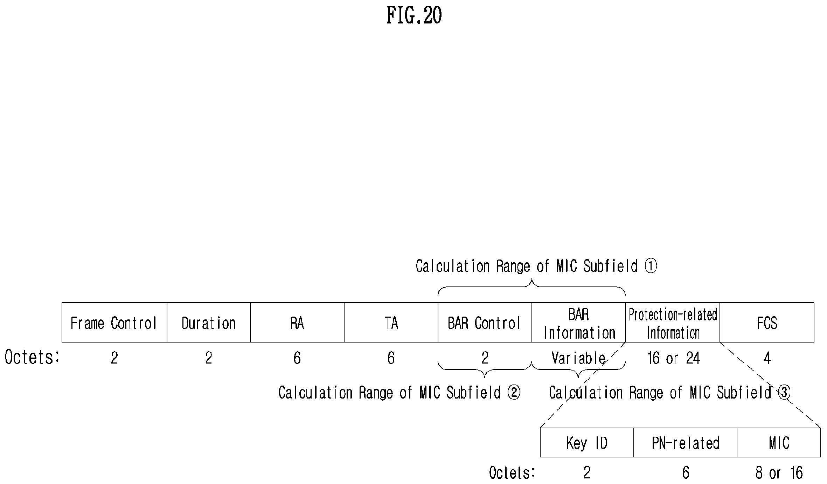

FIG. 20 represents another example of a block-ACK request frame configuration supporting an integrity check according to an embodiment of the present disclosure.

Referring to FIG. 20, a protection information field may be located before an FCS within a block-ACK request frame.

In this case, a transmitting STA may apply a BIP to a BAR control field and/or a BAR information field and add a protection information (sub)field to the last part to configure the value(s) of each subfield. Based on this, when transmitting STAs transmit a block-ACK request frame to a receiving STA, a block-ACK request frame as shown in FIG. 20 may be configured.

In this regard, MIC information may be configured by considering three cases. As an example, MIC information may be configured by deriving an MIC value for both a BAR control field and a BAR information field. As another example, MIC information may be configured by deriving an MIC value for a BAR control field. As another example, MIC information may be configured by deriving an MIC value for a BAR information field.

If a block-ACK request frame is a multi-TID block-ACK request frame type, the number information of a TID (e.g., N) included in a BAR information field may be delivered/indicated by a BAR control field. Based on this, a receiving STA may recognize that a protection information (sub)field is located after N sets (e.g., N BAR information field formats) including a Per TID Info subfield within a BAR information field.

### Embodiment 1-4

A protection information (sub)field according to the present disclosure may be located by utilizing an existing subfield structure within a BAR information field for a block-ACK request frame.

In this embodiment, for clarity of description, the structure of an existing BAR information field format consisting of a Per TID Info subfield and a block-ACK starting sequence control subfield is referred to as a set for (or corresponding to) Per TID Info.

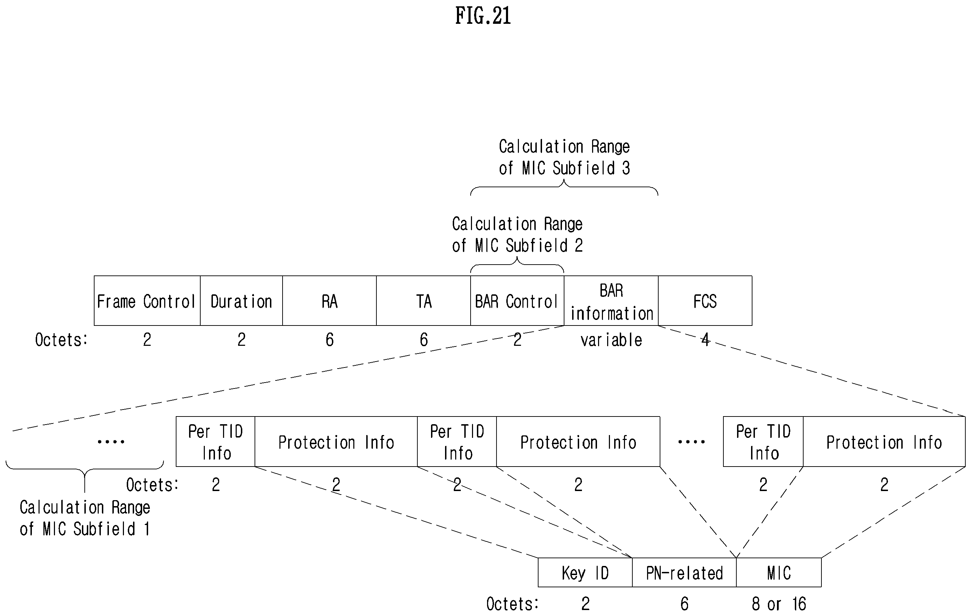

FIG. 21 represents another example of a block-ACK request frame configuration supporting an integrity check according to an embodiment of the present disclosure.

When a transmitting STA transmits a multi-TID block-ACK request frame, protection information as shown in FIG. 17 (e.g., a key ID, PN-related information, MIC information) may be included in sets for multiple Per TID Info.

Specifically, referring to FIG. 21, for sets for multiple Per TID Info, corresponding protection information may be included in (in place of) an existing block-ACK starting sequence control subfield position within each set. In other words, corresponding protection information may be partitioned into multiple segments based on a certain size (e.g., a 2-octet length), and partitioned segments may be included in a part other than a Per TID Info subfield across sets for multiple Per TID Info.

For example, when the length of a subfield for a key ID is 2 octets, the length of a subfield for PN-related information is 6 octets and the length of a subfield for MIC information is 8 octets, the total length of protection information corresponds to 128 bits, and corresponding protection information may be partitioned and located in sets for 8 Per TID Info. As another example, when the length of a subfield for a key ID is 2 octets, the length of a subfield for PN-related information is 6 octets and the length of a subfield for MIC information is 16 octets, the total length of protection information corresponds to 192 bits, and corresponding protection information may be partitioned and located in sets for 12 Per TID Info.

A receiving STA may confirm/recognize set(s) for Per TID Info including the protection information of the present disclosure based on the information of a Per TID Info subfield within a BAR information field within a received multi-TID block-ACK request frame, or based on TID number information included in a BAR information field specified/indicated within a BAR control field. A receiving STA may confirm/obtain information (or bits) corresponding to protection information located/included after a Per TID Info subfield within a set for Per TID Info, and may concatenate corresponding information (or bits) to complete key ID information, PN-related information, and MIC information. Based on this, a receiving STA may perform an integrity check on a multi-TID block-ACK request frame.

In this regard, when a pre-UHR STA (e.g., an EHT/HE STA, etc.) receives a multi-TID block-ACK request frame configured as shown in FIG. 21, a corresponding STA may ignore the information of set(s) for Per TID Info including protection information based on TID number information included in a BAR information field specified/indicated in a BAR control field, and does not perform an integrity check on a received block-ACK request frame.

An MIC value (e.g., the information of an MIC subfield) included in a multi-TID block-ACK request frame configured as shown in FIG. 21 may be derived by applying a BAR control field and/or BAR information field(s) to a BIP based on three methods. An integrity check on a block-ACK request frame may be performed based on one or more of the three methods.

The calculation range 1 of an MIC subfield illustrated in FIG. 21 relates to a method for deriving an MIC value for set(s) for Per TID Info included in a BAR information field within a multi-TID block-ACK request frame. In this case, set(s) for a corresponding Per TID Info field within a BAR information field may refer to a set for Per TID Info including information delivered by a transmitting STA to receiving STA(s). In other words, set(s) for a corresponding Per TID Info field may correspond to set(s) including a Per TID Info subfield and a block-ACK starting sequence control subfield. In other words, in calculating a corresponding MIC value, among the sets for Per TID Info included in a BAR information field, set(s) for Per TID Info including protection information described above are excluded.

In addition, the calculation range 2 of an MIC subfield illustrated in FIG. 21 relates to a method for deriving an MIC value for a BAR control field within a multi-TID block-ACK request frame.

In addition, the calculation range 3 of an MIC subfield illustrated in FIG. 21 may be a method that includes the calculation range 1 of an MIC subfield and the calculation range 2 of an MIC subfield. In other words, it relates to a method for deriving an MIC value for set(s) for Per TID Info within a BAR information field excluding set(s) for Per TID Info including protection information and a BAR control field within a multi-TID block-ACK request frame.

In relation to the above-described method, the Per TID Info subfield of a BAR information field within a multi-TID block-ACK request frame may indicate whether protection information is included in a corresponding set (e.g., a set for Per TID Info) based on at least one of the following methods.

### (Method 1)

A new field/information indicating whether protection information is present may be included within a Per TID Info subfield.

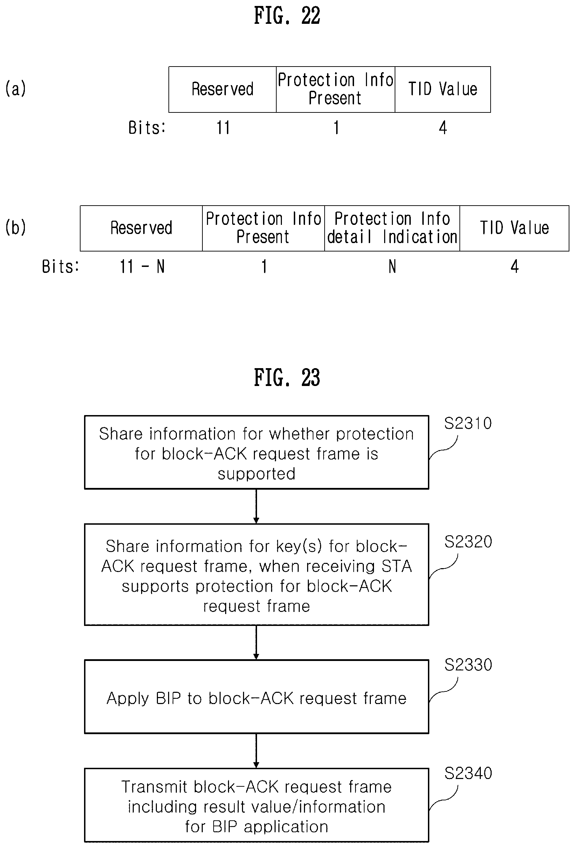

FIG. 22 illustrates the structures of a Per TID Info subfield for a set including protection information according to an embodiment of the present disclosure.

Referring to FIG. 22(a), a Per TID Info subfield included in a BAR information field within a multi-TID block-ACK request frame may include a subfield for protection information presence and a subfield for a TID value.

For example, when protection information is present in a set for Per TID Info, a Per TID Info subfield within a corresponding set may have a value indicating that protection information is present (e.g., a protection information present subfield set as 1). In contrast, when protection information is not present in a set for Per TID Info, a Per TID Info subfield within a corresponding set may have a value indicating that protection information is not present (e.g., a protection information present subfield set as 0). In this regard, a subfield for a TID value may be set as one of the reserved values (e.g., 0000, a value corresponding to one of TID 8 to TID 16) in addition to a value defined for an (existing) TID indication (e.g., a value from TID 0 to TID 7).

If a pre-UHR STA (e.g., an EHT/HE STA, etc.) receives a multi-TID block-ACK request frame configured as shown in FIG. 21, when a TID value within a Per TID Info subfield is set as one of the reserved values described above, a corresponding STA ignores information for set(s) including a corresponding Per TID Info subfield, and does not perform an integrity check on a received block-ACK request frame.

### (Method 2)

A new field/information indicating whether protection information is present and detail information for protection information included in a set for corresponding Per TID Info may be included within a Per TID Info subfield.

Referring to FIG. 22 (b), when a subfield for protection information presence within a Per TID Info subfield is set as a value indicating that protection information is present, a subfield for detail information for corresponding protection information (e.g., referred to as a protection info detail indication subfield) may be utilized/defined based on at least one of the following methods. In other cases (e.g., when a subfield for protection information presence within a Per TID Info subfield is set as a value indicating that protection information is not present), a subfield for detail information may have a value of 0 or Null.

### (Method 2-1)

A protection info detail indication subfield may be defined to indicate whether a set for corresponding Per TID Info corresponds to the last set to which protection information belongs. In this case, a corresponding protection info detail indication subfield may have a length of 1 bit.

For example, when protection information within a set for Per TID Info does not include the last information of the entire protection information configuration, a protection info detail indication subfield may be set as a value (e.g., 0) meaning that it is not a set including protection information last. On the other hand, when protection information within a set for Per TID Info includes the last information of the entire protection information configuration, a protection info detail indication subfield may be set as a value (e.g., 1) meaning that it is a set including protection information last.

Based on this, a receiving STA may confirm/recognize whether a set for corresponding Per TID Info within a BAR information field includes the last configuration of protection information through the value of a protection info detail indication subfield. Based on corresponding information, receiving STA(s) may recognize that it is a set for Per TID Info including the last protection information part/segment, and through this, receiving STA(s) may efficiently concatenate the parts/segments of protection information.

### (Method 2-2)

A protection info detail indication subfield may be defined to indicate information for which field value within protection information belongs to (or is included in) a set for corresponding Per TID within a BAR information field. In this case, a corresponding protection info detail indication subfield may have a length of 2 bits or 3 bits.

For example, when a corresponding subfield has a length of 2 bits, values from 0 to 3 may be used to indicate information for a key ID, PN-related information and MIC information. In this case, a set for one Per TID Info may include only a value belonging to one (sub)field within protection information. For example, for a set for the first Per TID Info including protection information, a protection info detail indication field may be set as a value indicating a key ID. In this case, 16 bits may be set as the value of a key ID in a part where protection information is included.

As another example, when a corresponding subfield has a length of 3 bits, values from 0 to 7 may be used to indicate information for a key ID, information for a key ID and PN-related information, PN-related information, PN-related information and MIC information, and MIC information. In this case, a set for one Per TID Info may include values belonging to multiple fields within protection information. In this case, when decoding a block-ACK request frame, receiving STA(s) may recognize what information is included in a set for Per TID Info through a protection info detail indication subfield. Through this, since receiving STA(s) may accurately recognize a damaged part, they may make a re-request to a transmitting STA for damaged information. Additionally, through a protection info detail indication subfield, corresponding receiving STA(s) may efficiently concatenate the parts/segments of protection information included in (across) sets for Per TID Info.

In this regard, if there is a reserved value among the values of a protection info detail indication field, a corresponding reserved value may be utilized to indicate that it is a set for the last Per TID to which/in which protection information belongs/is included. In this case, a specific method may be the same as described in Method 2- 1 described above.

### (Method 2-3)

A protection info detail indication subfield may be defined to indicate the number of sets for Per TID Info including protection information. In this case, a corresponding protection info detail indication subfield may have a length of 4 bit.

For example, for a set for the first Per TID Info including protection information, a protection info detail indication subfield may be set as a value of 0 or 1 to indicate that it is the first user information field including protection information. Starting from a set for subsequent Per TID Info, the value of a corresponding protection info detail indication field may be increased by 1.

In this regard, when the length of MIC information included in the entire protection information is 8 octets, the part/segment of protection information may be included by 16 bits per each in a set for Per TID Info, and a total of 4 sets may be present. Accordingly, for a set for the last Per TID Info including protection information, a protection info detail indication field may be set as a value (e.g., 3 or 4) indicating that a corresponding set is the 4th set.

In addition, when the length of MIC information included in the entire protection information is 16 octets, the part/segment of protection information may be included by 16 bits per each in a set for Per TID Info, and a total of 8 sets may be present. Accordingly, for a set for the last Per TID Info including protection information, a protection info detail indication field may be set as a value (e.g., 7 or 8) indicating that a corresponding set is the 8th set.

Based on a corresponding number, receiving STA(s) may efficiently concatenate the parts/segments of protection information included in (across) sets for Per TID Info. Additionally, when a transmitting STA and receiving STA(s) recognize the length of an MIC value in advance, they may recognize through a corresponding number that it is a set for Per TID Info including the last part/segment of protection information, and based on this, the concatenation of the parts/segments of protection information may be performed efficiently.

### Embodiment 1-5

This embodiment relates to a signaling method for whether an integrity check on a block-ACK request frame is supported.

Regarding a block-ACK request frame supporting an integrity check according to the present disclosure, transmitting STA(s) and receiving STA(s) may share information for whether a BIP for a block-ACK request frame is supported. The corresponding information may be shared through a specific element (e.g., an extended RSN element (RSNXE)) in a discovery process (e.g., a beacon frame, a probe response frame, etc.) and/or an (re)association process (e.g., a (re)association request frame, a (re)association response frame, etc.).

In this regard, by utilizing a reserved bit within an existing element (e.g., an RSNXE) or by defining a new (sub)field within a new element, whether BIP application to a block-ACK request frame is supported may be shared. For example, a 1-bit protected block-ACK request support (sub)field (protected BlockAckReq support (sub)field) may be newly defined, and it may be defined to ensure that a value of 1 means/indicates that application of a BIP to a block-ACK request frame is supported and a value of 0 means/indicates that application of a BIP to a block-ACK request frame is not supported.

If both a transmitting STA and a receiving STA support a BIP and support application of a BIP to a block-ACK request frame, two STAs may perform application of a BIP to a block-ACK request frame. In contrast, when a transmitting STA or a receiving STA support a BIP but does not support application of a BIP to a block-ACK request frame, the corresponding two STAs may not perform application of a BIP to a block-ACK request frame. Additionally, when a block-ACK request frame is applied to a BIP, the cipher suite of a management frame (e.g., BIP-GMAC(galois message authentication code)-128, BIP-GMAC-256, or BIP-CMAC(cipher-based message authentication code)-256, etc.) negotiated by a transmitting STA and a receiving STA during a negotiation process may be used in the same manner. Alternatively, in order to apply a block-ACK request frame to an integrity protocol (e.g., a separate integrity protocol for a control frame), a transmitting STA and a receiving STA may negotiate an additional/separate cipher suite for a corresponding block-ACK request frame (e.g., CIP(control integrity protocol)-GMAC-128, CIP-GMAC-256, CIP-CMAC-128, CIP-CMAC-256, etc.).

Additionally or alternatively, information for whether application of a BIP to a block-ACK request frame is supported and which one of the formats proposed in the present disclosure (e.g., formats illustrated in FIGS. 18 to 20) is used to configure a protection information (sub)field may be shared between a transmitting STA and a receiving STA. In this regard, for sharing corresponding information, a reserved bit within an existing element (e.g., an RSNXE) and/or reserved bit(s) within a BAR control field and/or a new (sub)field within a new element (e.g., a protected block-ACK request mode (sub)field) (protected BlockAckReq mode (sub)field) may also be defined. A corresponding (sub)field may be included in a beacon frame by a transmitting STA or included in a data frame by a receiving STA not only during an (re)association process but also during a data transmission and reception process.

For example, when the value of a protected block-ACK request mode (sub)field is set as 0, it may mean/indicate that a block-ACK request frame is configured in at least one manner and that a BIP is not applied to a corresponding block-ACK request frame. In contrast, when the value of a protected block-ACK request mode (sub)field is set as 1 or more, it may mean/indicate that a BIP is applied to a block-ACK request frame.

As a specific example, when a corresponding protected block-ACK request mode (sub)field may have a value greater than or equal to 1, the meaning of the value of a corresponding protected block-ACK request mode (sub)field may be defined as shown in Table 1 below. Table 1 is illustrative, and at least one of the values described in Table 1 may be applied/defined, and a specific value may be set/defined differently from a corresponding example.

**[Table 1]**

| Value of Protected Block-ACK Request Mode (sub)field | Meaning |
|---|---|
| 1 | Block-ACK Request Frame Configuration based on Embodiment 1-1 |
| 2 | Block-ACK Request Frame Configuration based on Embodiment 1-2 |
| 3 | Block-ACK Request Frame Configuration based on Embodiment 1-1 and Embodiment 1-2 |
| 4 | Block-ACK Request Frame Configuration based on Embodiment 1-3 |
| 5 | Block-ACK Request Frame Configuration based on Embodiment 1-4 |
| 6 | Block-ACK Request Frame Configuration based on Embodiment 1-3, Calculation of MIC Value for BAR Control Field and BAR Information Field |
| 7 | Block-ACK Request Frame Configuration based on Embodiment 1-3, Calculation of MIC Value for BAR Control Field |
| 8 | Block-ACK Request Frame Configuration based on Embodiment 1-3, Calculation of MIC Value for BAR Information Field |
| 9 | Block-ACK Request Frame Configuration based on Embodiment 1-4, Calculation of MIC Value for BAR Control Field and BAR Information Field |
| 10 | Block-ACK Request Frame Configuration based on Embodiment 1-4, Calculation of MIC Value for BAR Control Field |
| 11 | Block-ACK Request Frame Configuration based on Embodiment 1-4, Calculation of MIC Value for BAR Information Field |

Referring to Table 1, through a protected block-ACK request mode (sub)field, a method for calculating an MIC value along with the configuration/format of a block-ACK request frame including a protection information (sub)field according to the present disclosure may be indicated.

However, the scope of the present disclosure is not limited thereto, and through a protected block-ACK request mode (sub)field, only the configuration/format of a block-ACK request frame including a protection information (sub)field according to the present disclosure may be indicated, and a method for calculating an MIC value may be separately indicated through another (sub)field. For example, an MIC calculation range (sub)field may be defined, and the value of a corresponding (sub)field may be defined as shown in Table 2.

**[Table 2]**

| Value of MIC Calculation Range (sub)field | Meaning |
|---|---|
| a | Calculation of MIC Value for BAR Control Field and BAR Information Field |
| b | Calculation of MIC Value for BAR Control Field |
| c | Calculation of MIC Value for BAR Information Field |
| ... | Reserved |

For example, a receiving STA may recognize/confirm a location at which a protection information (sub)field is included within a received block-ACK request frame through a protected block-ACK request mode (sub)field. In addition, based thereon, a corresponding receiving STA may calculate an MIC value by using a value indicated by an MIC calculation range (sub)field, and through this, may perform an integrity check on a block-ACK request frame.

### Embodiment 2

The present embodiment relates to a method for generating an MIC for BIP transmission/reception regarding the above-described application of a BIP to a block-ACK request frame.

For a block-ACK request frame, the type of a block-ACK request frame transmitted and received may be indicated according to the value of a BAR type subfield within a BAR control field. According to an indicated value, a receiving STA may confirm whether a corresponding block-ACK request frame is an individually addressed frame or a group addressed frame. As an example, a compressed block-ACK request frame type (e.g., FIG. 19(a)) and a multi-TID block-ACK request frame type (e.g., FIG. 19(b)) may correspond to an individually addressed frame.

In this regard, when a BIP is applied to a block-ACK request frame, a key used for configuring an MIC value may be used differently according to whether a frame is an individually addressed frame or a group addressed frame.

For example, in the case of an individually addressed data frame, MIC value calculation may be performed by using a TK based on a PTK that is identically generated between a transmitting STA and a receiving STA. On the other hand, in the case of a group addressed data frame, MIC value calculation may be performed by using a TK based on a GTK shared by the transmitting STA with the receiving STA.

In the case of a conventional BIP (e.g., BIP applied to data frames/management frames), BIP usage based on an IGTK or a BIGTK is possible. In contrast, in the present disclosure, it is assumed that BIP usage based on a PTK/GTK is possible.

Hereinafter, a key usage method for calculating and checking an MIC value for an individually addressed block-ACK request frame and/or a group addressed block-ACK request frame will be described in detail.

First, for an individually addressed block-ACK request frame, an MIC value may be calculated/verified as follows.

A transmitting STA and a receiving STA may calculate an MIC value by using a TK based on a PTK that is identically generated during a 4-way handshake process. For example, with respect to application of a BIP to a block-ACK request frame, a transmitting STA and a receiving STA may identically utilize a PTK generated regarding the protection of a data frame during a 4-way handshake process or may utilize a (new) TK that is identically generated/negotiated/shared mutually regarding the protection of a control frame (e.g., a block-ACK request frame) during a 4-way handshake process.

Alternatively, a transmitting STA and a receiving STA may calculate an MIC value by using a TK based on a new PTK for an individually addressed block-ACK request frame that is shared during a 4-way handshake process. For example, a corresponding new TK may be referred to as a block-ACK request PTK (block-ACK request PTK, BARPTK), and a transmitting STA may generate and share a different BARPTK for each receiving STA. In other words, a different BARPTK may be shared for receiving STA 1 and receiving STA 2. In addition, for example, when an MIC is derived by using a new TK (e.g., a BARPTK, a BARGTK) for a block-ACK request frame, a transmitting STA may generate and share a new TK with each receiving STA. In other words, receiving STA 1 and receiving STA 1 may share the same new TK. In this case, through a new key data element (KDE) for a new TK (e.g., a BARPTK/BARGTK KDE) generated and shared by a transmitting STA, information for a corresponding new TK, information related to a cipher capable of using a corresponding new TK, etc. may be shared.

When a key (e.g., a new TK) for the protection of a block-ACK request frame exists, a receiving STA may use a corresponding key to perform an MIC check on a received block-ACK request frame. In this regard, a corresponding key may be generated and/or shared by a transmitting STA and/or a receiving STA. Otherwise, a receiving STA may perform an MIC check on a block-ACK request frame based on a key (e.g., a PTK) for the integrity check/encryption/decryption of a previously generated unicast data frame with a transmitting STA.

Next, for a group addressed block-ACK request frame, an MIC value may be calculated/checked as follows.

A transmitting STA may generate an IGTK or a BIGTK during a 4-way handshake process and share the same with a receiving STA, and the transmitting STA and the receiving STA may calculate a MIC value by using a TK based on the corresponding IGTK or the corresponding BIGTK.

Alternatively, a transmitting STA may generate a GTK during a 4-way handshake process and share the same with a receiving STA, and the transmitting STA and the receiving STA may calculate a MIC value by using a TK based on the corresponding GTK.

Alternatively, a transmitting STA may generate a new GTK for a group addressed block-ACK request frame during a 4-way handshake process and share the same with a receiving STA, and a transmitting STA and a receiving STA may calculate an MIC value by using a TK based on a corresponding new GTK. Herein, a new GTK may be referred to as a block-ACK request broadcast GTK (BARGTK), and a transmitting STA may share the same value of a BARGTK with receiving STAs. In other words, an AP may generate and share the same BARGTK with STAs associated with itself. In addition, between a transmitting STA and a receiving STA, information for a BARGTK and information related to a cipher suite that may use a corresponding BARGTK, etc. may be shared through a new KDE for a corresponding BARGTK (e.g., a BARGTK KDE).

If a receiving STA receives a key for protecting a block-ACK request frame (e.g., a BARGTK) from a transmitting STA, it may perform an MIC check on a block-ACK request frame based on a corresponding key. Otherwise, a receiving STA may perform an MIC check on a block-ACK request frame based on a key (e.g., a GTK, an IGTK or a BIGTK) for broadcast frame(s) shared in advance with a transmitting STA.

### Embodiment 3

The present embodiment relates to a specific method for performing the protection of a block-ACK request frame based on a block-ACK request frame configuration proposed in the present disclosure.

First, when a block-ACK request frame is a group addressed block-ACK request frame, a block-ACK request frame configuration proposed in the present disclosure may be used as in the following examples.

For example, for a block-ACK request frame configuration described in Embodiment 1-1 (e.g., refer to FIG. 18), a transmitting STA and/or a receiving STA may derive an MIC value through a BIP by using the above-described GTK, IGTK or BIGTK or a new TK (e.g., a BARGTK) for a BAR control field. Additionally, for a block-ACK request frame configuration described in Embodiment 1-2 (e.g., refer to FIG. 19(a) and (b)), a transmitting STA and/or a receiving STA may derive an MIC value through a BIP by using the above-described PTK or a new TK (e.g., a BARPTK) for a BAR information field. In this regard, a new TK (e.g., a BARPTK) or the PTK of an STA corresponding to the MAC address of a transmitting STA (e.g., a recipient address (RA)) may be utilized.

As another example, for a block-ACK request frame configuration described in Embodiment 1-3 (e.g., refer to FIG. 20), a transmitting STA and/or a receiving STA may derive an MIC value through a BIP by using the above-described GTK, IGTK or BIGTK or a new TK (e.g., a BARGTK) for a BAR control field and/or a BAR information field.

Additionally, for a block-ACK request frame configuration described in Embodiment 1-4 (e.g., refer to FIG. 21), according to the calculation range of an MIC value (e.g., calculation range 1, calculation range 2, calculation range 3), key usage-related examples for deriving an MIC value described above may be extended and applied to the case of Embodiment 1-1, Embodiment 1-2, and/or Embodiment 1-3.

Next, when a block-ACK request frame is an individually addressed block-ACK request frame, a block-ACK request frame configuration proposed in the present disclosure may be used as in the following examples.

For example, for a block-ACK request frame configuration described in Embodiment 1-1 (e.g., refer to FIG. 18), a transmitting STA and/or a receiving STA may derive an MIC value through a BIP by using the above-described PTK or a new TK (e.g., a BARPTK) for a BAR control field. In this case, in order to derive an MIC value for a BAR control field, a new TK (e.g., a BARPTK) or the PTK of an STA corresponding to the recipient address (RA) of a corresponding block-ACK request frame may be used.

As another example, for a block-ACK request frame configuration described in Embodiment 1-2 (e.g., refer to FIG. 19(a) and (b)), a transmitting STA and/or a receiving STA may derive an MIC value through a BIP by using the above-described PTK or a new TK (e.g., a BARPTK) for a BAR information field. In this regard, a new TK (e.g., a BARPTK) or the PTK of an STA corresponding to the MAC address (e.g., a recipient address (RA)) of a transmitting STA may be used.

As another example, for a block-ACK request frame configuration described in Embodiment 1-3 (e.g., refer to FIG. 20), a transmitting STA and/or a receiving STA may derive an MIC value through a BIP by using the above-described PTK or a new TK (e.g., a BARPTK) for a BAR control field and/or a BAR information field. In this case, in order to derive an MIC value for a BAR control field and/or a BAR information field, a new TK (e.g., a BARPTK) or the PTK of an STA corresponding to the recipient address (RA) of a corresponding block-ACK request frame may be used.

Additionally, for a block-ACK request frame configuration described in Embodiment 1-4 (e.g., refer to FIG. 21), according to the calculation range of an MIC value (e.g., calculation range 1, calculation range 2, calculation range 3), key usage-related examples for deriving an MIC value described above may be extended and applied to the case of Embodiment 1-1, Embodiment 1-2, and/or Embodiment 1-3.

Based on methods proposed in the present disclosure, protection for a block-ACK request frame may be performed as follows.

For exemplary situations described below, it is assumed that a transmitting STA and receiving STA(s) support the utilization of a block-ACK request frame on a BIP through a protected block-ACK request support (sub)field and/or share a method for configuring a protection information (sub)field within a block-ACK request frame through a protected block-ACK request mode (sub)field.

A receiving STA may configure additional authentication data (AAD) for a block-ACK request frame based on the information of the MAC header of an MPDU received from a transmitting STA (e.g., a frame control field, a duration field, an RA field, a TA field, etc.). Thereafter, a receiving STA may utilize corresponding AAD when calculating an MIC value based on an MPDU. In this case, a receiving STA may derive an MIC value by performing a process performed when calculating an MIC value based on a corresponding MPDU in the same manner.

Thereafter, the receiving STA may compare the derived MIC value with a MIC value transmitted by the transmitting STA (e.g., MIC information included in a protection information (sub)field). If the two MIC values are identical, the receiving STA may follow information of the obtained MPDU. In contrast, if the two MIC values are not identical, the receiving STA may recognize that at least one piece of information within the obtained MPDU has been modified by a third STA (e.g., an attacking STA) or has been corrupted during transmission/reception, and may discard the same.

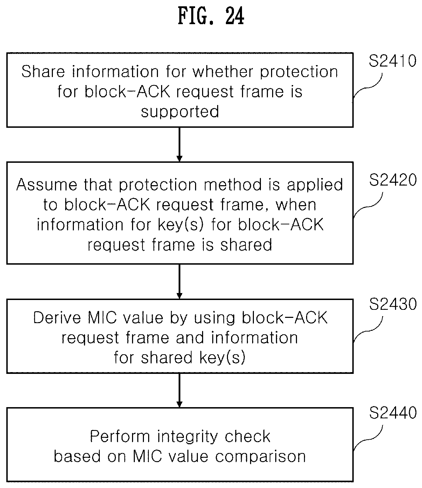

The operation of an STA supporting/performing protection for a block-ACK request frame according to an embodiment of the present disclosure may be as shown in FIGS. 23 and 24.

FIG. 23 illustrates the operation of a transmitting STA supporting an integrity check for a block-ACK request frame according to the present disclosure.

Referring to FIG. 23, a transmitting STA may share information for whether protection (e.g., an integrity check) for a block-ACK request frame is supported with a receiving STA S2310.

In this case, when both a transmitting STA and receiving STA(s) apply security to a block-ACK request frame, a transmitting STA may generate and share key(s) (e.g., PTK/GTK/BARPTK/BARGTK(s)) used for the integrity check of a block-ACK request frame S2320. In this regard, a transmitting STA and a receiving STA may generate/negotiate/share the same key information through a key generation process or key information generated by a transmitting STA may be delivered to a receiving STA.

Based on corresponding key(s), a transmitting STA may apply a BIP to a configured block-ACK request frame S2330. In this regard, a transmitting STA may derive an MIC value for a block-ACK request frame by using key(s) shared in advance with a receiving STA.

A transmitting STA may transmit a block-ACK request frame including a result value/information for BIP application S2340. For example, a transmitting STA may transmit a block-ACK request frame including a derived MIC value and the ID value of key(s) used to derive a corresponding MIC value to receiving STA(s).

Regarding the above-described process, a transmitting STA may share/negotiate information for which format is used to configure information related to an integrity check within a transmitted block-ACK request frame in advance with a receiving STA or may transmit corresponding information by including it in a block-ACK request frame.

FIG. 24 illustrates the operation of a receiving STA supporting an integrity check for a block-ACK request frame according to the present disclosure.

Referring to FIG. 24, a receiving STA may share information for whether protection (e.g., an integrity check) for a block-ACK request frame is supported with a transmitting STA S2410.

In this case, when key(s) used for the integrity check of a block-ACK request frame are shared with a transmitting STA, a receiving STA may assume that a protection method is applied to a block-ACK request frame transmitted by a transmitting STA S2420.

In this regard, a transmitting STA and a receiving STA may generate/negotiate/share the same key information (e.g., PTK/GTK/BARPTK/BARGTK, etc.) through a key generation process or key information generated by a transmitting STA may be delivered to a receiving STA.

For example, a receiving STA may receive a block-ACK request frame transmitted from a transmitting STA and recognize that it is applied to a BIP based on information related to a method for configuring information for an integrity check within a block-ACK request frame and/or key(s) shared in advance.

Based on this, when receiving a block-ACK request frame, a receiving STA may derive an MIC value by using a block-ACK request frame and previously shared/generated/negotiated key(s) (e.g., PTK/GTK/BARPTK/BARGTK, etc.) S2430.

Subsequently, a receiving STA may perform an integrity check by comparing a derived MIC value with an MIC value transmitted by a transmitting STA (i.e., an MIC value according to MIC information included within a block-ACK request frame) S2440.

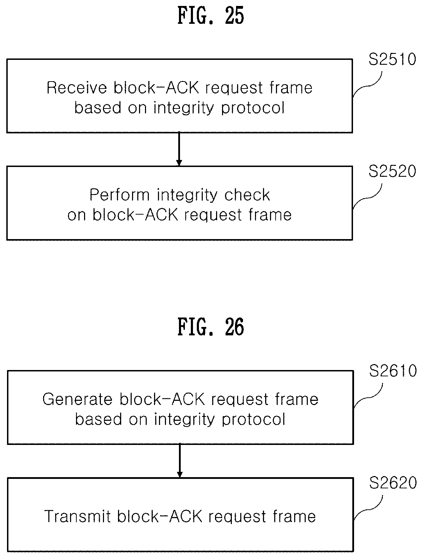

Hereinafter, FIGS. 25 and 26 illustrate an operation performed by an STA according to the proposed method of the present disclosure described above. In FIGS. 25 and 26, the second STA may correspond to a transmitting STA (e.g., an AP) and the first STA may correspond to a receiving STA (e.g., a non-AP STA associated with an AP).

FIG. 25 is a diagram for describing an example of a method performed by the first STA according to the present disclosure.

Referring to FIG. 25, the first STA may receive, from the second STA, a block-ACK request frame based on an integrity protocol (e.g., a BIP) (S2510).

In this regard, a block-ACK request frame may include, as a block-ACK request information field, one or more first field sets for information related to block ACK and one or more second field sets for protection-related information for the integrity check. In this case, protection-related information may be included across one or more second field sets. In other words, protection-related information may be configured by concatenating information parts (or segments) for protection-related information included in one or more second field sets.

For example, according to the present disclosure, the first field set may be a set for Per TID Info including information delivered by a transmitting STA to receiving STA(s), and the second field set may be a set for Per TID Info including protection-related information.

The first STA may perform an integrity check on a received block-ACK request frame (S2520).

According to the present disclosure, when protection-related information is present in the second field set, a TID value subfield included in a corresponding second field set may be set as a pre-defined value for the presence of protection-related information (e.g., one of the existing reserved values in a TID value subfield).

In addition, according to the present disclosure, the second field set may include information for whether protection-related information is present (e.g., a protection information present subfield in FIG. 22). In this regard, when protection-related information is present in the second field set, a corresponding second field set may further include indication information related to the configuration of protection-related information.

For example, corresponding indication information may include information for whether it is the last second field set in which protection-related information is present.

And/or, for example, corresponding indication information may include information for which field value among the fields of protection-related information is included in the second field set. Here, the fields of protection-related information may include at least one of the first field for a key identifier (ID), the second field for a packet number, or the third field for message integrity code (MIC) information. In this regard, MIC information may be calculated based on one or more first field sets, may be calculated based on a block-ACK control field within a block-ACK request frame, or may be calculated based on one or more first field sets and a block-ACK control field. In this case, information for which field value among the fields of protection-related information is included in the second field set may be defined to indicate one of the first field, the second field, the third field, the first field and the second field, or the second field and the second field.

And/or, for example, corresponding indication information may include information for the order of one or more second field sets. Here, information for the order may be set as a value in increasing order based on a value for the first second field set.

In addition, according to the present disclosure, information for whether an integrity protocol for a block-ACK request frame is supported may be exchanged between the first STA and the second STA. As an example, corresponding information may be exchanged through at least one of a beacon frame, a probe request frame, a probe response frame, an association request frame, an association response frame or a block-ACK request frame.

In addition, according to the present disclosure, information for the configuration of a field to which an integrity protocol is applied may be exchanged between the first STA and the second STA. As an example, corresponding information may be included in a block-ACK request control field within the frame body of a block-ACK request frame.

In addition, according to the present disclosure, an integrity check may be performed based on key information related to protection for a block-ACK request frame, and corresponding key information may be included in protection-related information. As an example, when a block-ACK request frame corresponds to an individually addressed frame, key information may be based on a PTK for the first STA and the second STA. As another example, when a block-ACK request frame corresponds to a group addressed frame, key information may be based on a GTK for the first STA and the second STA.

In addition, according to the present disclosure, when an integrity protocol described above corresponds to a specific integrity protocol for a block-ACK request frame (e.g., an integrity protocol for a control frame), a cipher suite for a corresponding specific integrity protocol (e.g., a cipher suite negotiated for a corresponding specific integrity protocol) may be based on GMAC or CMAC.

A method described in the example of FIG. 25 may be performed by the first device 100 in FIG. 1. In other words, the first STA in FIG. 25 may be implemented as the first device 100. For example, one or more processors 102 of the first device 100 of FIG. 1 may be configured to receive a block-ACK request frame based on an integrity protocol and perform an integrity check on a corresponding block-ACK request frame.

In this regard, the first STA recognizes whether protection/security is applied to a received block-ACK request frame based on information shared/negotiated in advance with the second STA, and may perform an integrity check based on a BIP. For example, one or more processors 102 may parse an MAC frame obtained through PHY decoding for the data field of a PPDU received through one or more transceivers 106. One or more processors 102 may derive MIC information based on a BIP for a parsed MAC frame and perform an integrity check by comparing MIC information transmitted by a transmitting STA with derived MIC information.

Furthermore, one or more memories 104 of the first device 100 may store instructions for performing a method described in the example of FIG. 25 or examples described above when being executed by one or more processors 102.

FIG. 26 is a diagram for describing an example of a method performed by the second STA according to the present disclosure.

Referring to FIG. 26, the second STA may generate a block-ACK request frame based on an integrity protocol (e.g., a BIP) S2610.

In this regard, a block-ACK request frame may include, as a block-ACK request information field, one or more first field sets for information related to block ACK and one or more second field sets for protection-related information for the integrity check. In this case, protection-related information may be included across one or more second field sets. In other words, protection-related information may be configured by concatenating information parts (or segments) for protection-related information included in one or more second field sets.

For example, according to the present disclosure, the first field set may be a set for Per TID Info including information delivered by a transmitting STA to receiving STA(s), and the second field set may be a set for Per TID Info including protection-related information.

The second STA may transmit a generated block-ACK request frame to the first STA S2620.

Since specific details for the first field set, the second field set, protection-related information and information included in the second field set in relation thereto, information for whether an integrity protocol for a block-ACK request frame is supported, information for the configuration of a field to which an integrity protocol is applied (and/or an MIC calculation range), key information related to protection for a block-ACK request frame, etc. are identical/similar to those described in FIG. 25, a specific description thereof is omitted.

A method described in the example of FIG. 26 may be performed by the second device 200 in FIG. 1. In other words, the second STA in FIG. 26 may be implemented as the second device 200. For example, one or more processors 202 of the second device 200 of FIG. 1 may be configured to generate a block-ACK request frame based on an integrity protocol and transmit a generated block-ACK request frame.

In this regard, the second STA may perform an operation including information related to an integrity check (e.g., a derived MIC value, key information for deriving an MIC value, a packet number (PN) for a corresponding block-ACK request frame, etc.) by applying a BIP to a block-ACK request frame based on information shared with the first STA before configuring a PPDU.

Furthermore, one or more memories 204 of the second device 200 may store instructions for performing a method described in the example of FIG. 26 or examples described above when being executed by one or more processors 202.

An integrity protocol such as a BIP, etc. utilized in an existing WLAN system may not provide protection for a control frame such as a block-ACK request frame. The present disclosure may provide a new method for transmitting or receiving a protected control frame by defining an integrity protocol such as a BIP, etc. for a control frame such as a block-ACK request frame.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method comprising:
receiving, by a first station (STA), a block-acknowledgement(ACK) request frame based on an integrity protocol from a second STA; and
performing, by the first STA, an integrity check on the block-ACK request frame,
wherein the block-ACK request frame includes, as a block-ACK request information field, one or more first field sets for information related to block ACK and one or more second field sets for protection-related information for the integrity check, and
wherein the protection-related information is included across the one or more second field sets.

2. The method of claim 1, wherein:
based on the protection-related information being present in the second field set, a traffic identifier (TID) value subfield included in the second field set is set as a pre-defined value for presence of the protection-related information.

3. The method of claim 1, wherein:
a second field set includes information for whether the protection-related information is present.

4. The method of claim 3, wherein:
based on the protection-related information being present in the second field set, the second field set includes indication information related to a configuration of the protection-related information.

5. The method of claim 4, wherein:
the indication information includes information for whether it is a last second field set in which the protection-related information is present.

6. The method of claim 4, wherein:
the indication information includes information for which field value among fields of the protection-related information is included in the second field set.

7. The method of claim 6, wherein:
the fields of the protection-related information include at least one of a first field for a key identifier (ID), a second field for a packet number, or a third field for message integrity code (MIC) information.

8. The method of claim 7, wherein the MIC information:
is calculated based on the one or more first field sets,
is calculated based on a block-ACK control field within the block-ACK request frame, or
is calculated based on the one or more first field sets and the block-ACK control field.

9. The method of claim 7, wherein:
the information for which field value among the fields of the protection-related information is included in the second field set is defined to indicate one of the first field, the second field, the third field, the first field and the second field, or the second field and the third field.

10. The method of claim 4, wherein:
the indication information includes information for an order of the one or more second field sets, and
the information for the order is set as a value in an increasing order based on a value for a first second field set.

11. The method of claim 1, wherein:
the protection-related information is configured by concatenating information parts for the protection-related information included in the one or more second field sets.

12. The method of claim 1, wherein:
between the first STA and the second STA, information for whether an integrity protocol for the block-ACK request frame is supported is exchanged.

13. The method of claim 12, wherein:
the information for whether the integrity protocol for the block-ACK request frame is supported is exchanged through at least one of a beacon frame, a probe request frame, a probe response frame, an association request frame, an association response frame, or the block-ACK request frame.

14. The method of claim 1, wherein:
between the first STA and the second STA, information for a configuration of a field to which the integrity protocol is applied is exchanged.

15. The method of claim 14, wherein:
the information for the configuration of the field to which the integrity protocol is applied is included in a block-ACK request control field within the frame body.

16. The method of claim 1, wherein:
the integrity check is performed based on key information related to protection for the block-ACK request frame,
based on the block-ACK request frame corresponding to an individually addressed frame, the key information is based on a pairwise transient key (PTK) for the first STA and the second STA, and
based on the block-ACK request frame corresponding to a group addressed frame, the key information is based on a group temporal key (GTK) for the first STA and the second STA.

17. The method of claim 1, wherein:
based on the integrity protocol corresponding to a specific integrity protocol for the block-ACK request frame, a cipher suite for the specific integrity protocol is based on a galois message authentication code (GMAC) or a cipher-based message authentication code (CMAC).

18. A device comprising:
one or more transceivers; and
one or more processors connected to the one or more transceivers,
wherein the one or more processors are configured to:
receive, by a first station (STA), a block- acknowledgement(ACK) request frame based on an integrity protocol from a second STA; and
perform, by the first STA, an integrity check on the block-ACK request frame,
wherein the block-ACK request frame includes, as a block-ACK request information field, one or more first field sets for information related to block ACK and one or more second field sets for protection-related information for the integrity check, and
wherein the protection-related information is included across the one or more second field sets.

19. A method comprising:
generating, by a second station (STA), a block-ACK request frame based on an integrity protocol; and
transmitting, by the second STA, the block-ACK request frame to a first STA,
wherein the block-ACK request frame includes, as a block-ACK request information field, one or more first field sets for information related to block ACK and one or more second field sets for protection-related information for the integrity check, and
wherein the protection-related information is included across the one or more second field sets.

20. A device comprising:
one or more transceivers; and
one or more processors connected to the one or more transceivers,
wherein the one or more processors are configured to:
generate, by a second station (STA), a block-ACK request frame based on an integrity protocol; and
transmit, by the second STA, the block-ACK request frame to a first STA,
wherein the block-ACK request frame includes, as a block-ACK request information field, one or more first field sets for information related to block ACK and one or more second field sets for protection-related information for the integrity check, and
wherein the protection-related information is included across the one or more second field sets.

21. A processing device comprising:
one or more processors; and
one or more computer memories operably connected to the one or more processors, and based on being executed by the one or more processors, storing instructions for performing a method according to any one of claim 1 to claim 17.

22. One or more non-transitory computer-readable media storing one or more instructions that control to perform a method according to any one of claim 1 to claim 17 by being executed by one or more processors.
